(19) Europäisches Patentamt

European Patent Office

Office européen des brevets

(11) **EP 3 672 251 A1**

(12) **EUROPEAN PATENT APPLICATION**

(43) Date of publication:
**24.06.2020 Bulletin 2020/26**

(51) Int Cl.:
**H04N 19/597** (2014.01)      **H04N 19/17** (2014.01)
**H04N 19/167** (2014.01)      **H04N 19/40** (2014.01)

(21) Application number: **19216419.2**

(22) Date of filing: **16.12.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.12.2018  EP 18214571**

(71) Applicants:
• **Koninklijke KPN N.V.**
  **3072 AP Rotterdam (NL)**
• **Nederlandse Organisatie voor toegepast-
  natuurwetenschappelijk Onderzoek TNO**
  **2595 DA 's-Gravenhage (NL)**

(72) Inventors:
• **Brandt, Aschwin Steven Reinier**
  **2585 EJ The Hague (NL)**

• **Hindriks, Hendrikus Nathaniël**
  **2526 BL The Hague (NL)**
• **D'Acunto, Lucia**
  **2611 AS Delft (NL)**
• **THOMAS, Emmanuel**
  **2611 WD Delft (NL)**
• **Gunkel, Simon**
  **1115 CB, Duivendrecht (NL)**
• **VAN DEVENTER, Mattijs, Oskar**
  **2264 DL Leidschendam (NL)**
• **PRINS, Martin**
  **2564 BL The Hague (NL)**

(74) Representative: **Wuyts, Koenraad Maria**
  **Koninklijke KPN N.V.**
  **Intellectual Property Group**
  **P.O. Box 25110**
  **3001 HC Rotterdam (NL)**

(54) **PROCESSING VIDEO DATA FOR A VIDEO PLAYER APPARATUS**

(57)     Method and system of providing video data to a video player apparatus are described, wherein the method includes the steps of a processor of the video processing apparatus receiving a video frame; the processor receiving viewpoint information from the video player apparatus, the viewpoint information defining a bounded viewport area of pixels in the video frame; the processor generating a processed video frame on the basis of the viewpoint information, the generating including reducing the entropy of pixel values in the video frame by changing pixel values of pixels that are located outside the viewport area;

the processor encoding the processed video frame into a bitstream and providing the bitstream to a video transmission apparatus associated with the video processing apparatus; and, the video transmission apparatus transmitting the bitstream to the video player apparatus.

FIG. 6

**Description**

Field of the invention

The invention relates to processing video data for a video player apparatus, and in particular, though not exclusively, to methods and systems for processing video data, in particular spherical video data, for a video player apparatus. The invention further relates to a computer program product enabling a computer system to perform such method.

Background of the invention

Advances in both camera and image processing technologies not only enable video recording and processing of conventional 2D high resolution video, but also full 360-degree video at resolutions higher than 8K×4K. 360-video and omnidirectional video are examples of spherical video data, defining pixels that are positioned on a spherical surface. This type of video data may hereafter be referred to as spherical video. Spherical video provides new user experiences such as virtual reality (VR) and augmented reality (AR) which are currently gaining momentum in the industry. Massive streaming of such high quality spherical video however still poses challenges due to the high-bandwidth requirements that are needed.

However, a user viewing video content may be interested in only a limited area of pixels within the video frames. Consequently, the video player may be configured to display only a part of the video the user is viewing, which is typically referred to as a region of interest (ROI). Such scheme least to redundant video data, i.e. video data outside the viewport that is not displayed, being transmitted to the video player. This problem of redundancy is even more pronounced in the case of panoramic and spherical video. In these cases, the user typically is not able to view the entire amount of video content at once, as part of the video relates to video that is outside the field of view of the viewer.

In practice, the available bandwidth will be a trade-off between efficiency and user experience. On one hand, there is the need to provide users the viewport they are interested in at a high quality and, at the same time, with minimal latency. In practice this is a difficult aim to meet because, although a viewport of a viewer watching spherical video is spatially limited, users may continuously change their viewport during video streaming, and the transition from one viewport to the other should be smooth. Similarly, a user viewing a spatially limited (e.g. zoomed-in) part of a regular video, may change the ROI by panning.

In view of the above described problems, efforts are made to limit the transmitted data to the ROI, i.e. the part of the video the user is currently viewing. An example of such ROI-based video streaming scheme described in WO2018/069466 A1.

In this such scheme video frames of a video source may be spatially divided (tiled or segmented) in to (typically rectangular) parts, which may be referred to as 'tiles or 'chunks. Sequences of tiles may be independently encoded and stored as tile streams. Information associated with tile streams, e.g. the position of a tile in the original video sources or URL or URI information for retrieving the tile streams may be stored in a manifest file. A video player device may use the manifest file to request transmission of specific tile streams, which coincide with the ROI of viewport of the viewer. As the ROI usually does not exactly coincide with a tile or multiple tiles, still an amount of redundant data will be transmitted to the client side. Moreover, the ROI-based video streaming scheme that uses multiple tilted video streams requires relatively complex functionality at the client side, which is less suitable for use with legacy devices.

X. Xie and X. Zhang, described in their article POI360: Panoramic mobile video telephony over LTE cellular networks CoNEXT'17, December 12-15, 2017, proceedings of the 13th International Conference on emerging Networking EXperiments and Technologies pp. 336-349 a ROI-based video compression scheme, wherein a video processor in the network, e.g. video server, receives a full 360-video (comprising equirectangular projected video frames) and a ROI of a viewer of a 360-video playout device, e.g. a head mounted device (HMD). The video processor may divide the video frames of the 360-video into tiles which are compressed separately based on their relative position with respect to the position of the ROI. The video compression is configured such that tiles outside the ROI are compressed using a higher compression level. The compressed frame thus comprises high quality, low compressed video data at the ROI and low quality, high compressed video data away from the ROI so that bandwidth can be saved. The compressed frames are transmitted via an uplink to the video playout device of the user. At client side the video frames are decoded and reconstructed, resulting in a high-quality image for the ROI area (the current viewing direction of the user). A low-quality image is only visible when the user rapidly changes its viewing direction so that the video playout device displays video data outside the ROI which were compressed using a high compression level.

The proposed ROI-based video compression scheme is executed in the coding domain, requiring special proprietary video coding functionality. When using the ROI-based video compression scheme, still a large amount of redundant video data, i.e. video data that will not be viewed by the viewer, is transmitted to the client. Further, although some of the client functionally is transferred to the network, still special decoder functionality is required to decode the encoded video data, reconstruct the video frame and display video data of the video frame that coincides with the ROI. Moreover, the ROI-based video compression scheme uses equirectangular projected 360 video frames in which a ROI still can be selected on the basis of a rectangular area. However, when using other types of popular 360 video formats such as the so-called cubic projection type 360 video, simple selection of a ROI on the basis of a rectangular area in a video frame is no longer possible.

Hence, from the above, it follows that there is a need in the art for systems and methods of efficiently providing video data to video players. In particular, there is a need in the art for video processing methods and system, in particular ROI-based video processing methods and system, that provide low computation complexity at the client side, that provide an improved motion-to-high-quality latency, i.e. the time it takes between the moment a viewport is changed, and the moment the change is displayed on the display in full resolution, and that are compatible with various 360-video projection schemes.

Summary of the invention

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fibre, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including a functional or an object oriented programming language such as Java(TM), Scala, C++, Python or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer, server or virtualized server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), or graphics processing unit (GPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The invention will be further illustrated with reference to the attached drawings, which schematically will show embodiments according to the invention. It will be understood that the invention is not in any way restricted to these specific embodiments.

In this application, the term "spherical video" or "spherical video data" is used to refer to any kind of video that can be viewed in multiple directions. This may be e.g. omnidirectional video data, which can be viewed in all directions (3 degrees of freedom); panoramic video data, which has rotational freedom along 1 axis, typically the vertical axis, with a fixed field of view in the up-down direction (1 degree of freedom); or video projected data on a hemisphere. Typically, pixels of spherical video data are associated with a coordinate system describing the spherical surface, e.g. a sphere or a cylinder. In order to enable rendering of spherical video data by state of the art video coding systems, spherical video data are projected onto a 2D rectangular area of a video frame

Further, the term "viewpoint" refers to a point on a virtual sphere which indicates the viewing direction of a user of a video processing apparatus which is positioned at the center of the sphere. The viewpoint defines a viewing direction of the user. The viewpoint is associated with a so-called "viewport" and a "field of view". The viewport defines an area around the viewpoint which is linked to an area in a video frame comprising pixels for display to a user of the video player apparatus. The viewport is used by a video processing apparatus to determine which pixels in the video frame need to be processed, i.e. masked, as described with reference to the embodiments in this disclosure. The FOV defines the extend of the area of the viewport that can displayed by the video processing device at one time instance. The size of the viewport may coincide with the FOV of the video processing apparatus, however preferably the viewport is larger than the FOV. As the invention may be most advantageous when applied to spherical video data, most examples in this disclosure focus on spherical video data; however, it should be noted that the invention may equally well be applied to conventional video, when the viewport is smaller than the full video frame (as may be the case e.g. when zooming).

It is an aim of the embodiments in this disclosure to process video data (pixels of video frames) before the video data are encoded on the basis a video coding scheme. This way, the amount of video data that needs to be encoded and compressed before transmitting the data to a client device can be substantially reduced and the bandwidth that is needed to transmit the compressed video data to a client device can be effectively reduced. The invention is particularly advantageous for processing spherical video data, e.g. 360 or omnidirectional video data. Furthermore, it is an aim of the embodiments to decrease the amount of video data that needs to be coded in a manner that requires no or minimal modifications to existing client devices.

In an aspect, this aim may be realised by a method of processing video data wherein the method may comprise: a processor of a video processing apparatus receiving a decoded video frame, the video frame comprising video data representing a video image, the video data including pixels, wherein each pixel is associated with a pixel value; the processor receiving viewpoint information from a client apparatus associated with a display, the viewpoint information including viewing direction information defining a viewing direction of a user of the display the viewing direction information being associated with a field of view, FOV, region and a viewport region in the video image, the FOV region defining a region which can be rendered on the display and the viewport region defining a region in the video image that includes the FOV region; the processor determining mask information based on the viewing direction information and the decoded video frame, the mask information indicating for pixels of the decoded video frame if a pixel is located outside the viewport region; the processor using the mask information to transform the decoded video frame into a decoded masked video frame by applying a masking operation to pixels outside the viewport region, the masking operation reducing the entropy of pixel values of at least part of the pixels outside the viewport region; and, the processor providing the decoded masked video frame to the input of an encoder apparatus and, the encoder apparatus encoding the decoded masked video frame into an encoded masked video frame.

In an embodiment, the pixel values may represent a brightness and/or colour value.

In an embodiment, the method may comprise: a transmitter apparatus transmitting the encoded masked video frame to a decoding apparatus associated with the client apparatus, preferably transmitting at least part of the encoded masked video frame over a wireless transmission medium, wherein the transmission is based on at least one of: 3G, 4G, 5G, Wi-Fi or Bluetooth.

In an embodiment, metadata associated with the encoded masked video frame may be transmitted to a decoding apparatus associated with the client apparatus, wherein the metadata may include at least part of the viewpoint information, more preferably the position of the viewpoint, that was used by the video processing apparatus to generate the encoded masked video frame.

Reducing the entropy of the pixel values of pixels of decoded (raw) video frames that are located outside the viewport reduces the information that needs to be encoded and transmitted to a client device. The entropy reduction is realized by applying a masking operation to pixels outside the viewport. The masking operation is applied before the encoding process and thus may be regarded as a pre-encoding step to generating masked video frames. Processing pixels of a video frame based on a low-entropy mask may reduce the amount of information in a video frame that needs to be compressed and transmitted. The masked areas define pixel areas in a video frame that are not going to be rendered by the client device. This way the video frames can be efficiently compressed using state of the art video coding techniques.

Here, a decoded video frame may refer to a video frame of a non-compressed, e.g. raw, data format. The client apparatus may be integrated together with a display apparatus, e.g. a head mounted device or the like. Alternatively, the client apparatus may be executed by a mobile device, e.g. electronic tablet which can be (wirelessly) connected to a display device. Further, a user of the display may watch the content rendered by the display apparatus.

In an embodiment, the masking operation may include: modifying at least part of the pixel values of pixels outside the viewport region into modified pixel values, the modified pixel values being a single predetermined value or the modified pixel values forming a regular pattern and/or periodical pattern.

In another embodiment, the masking operation may include: modifying at least part of the pixel values of pixels outside the viewport into modified pixel values representing a low-resolution version of the pixel values.

Thus, the entropy may be reduced applying a so-called low-entropy mask (e.g. monochromatic pixel values or a regular pixel pattern such as a periodic pixel pattern) to pixels outside the viewport, i.e. areas of pixels that are not going to be rendered by the client device. In an embodiment, a mask may be implemented as a graphical overlay. A video frame that results from combining the mask with (or applying the mask to) an original decoded (raw) video frame may be referred to as a masked video frame or a processed video frame. Whereas the original video frame may be referred as a non-masked video frame.

Thus, the invention may include a method wherein a server may use viewpoint information sent by a client device to the server to create an image from a video source that contains only or mostly the pixel data that are going to be displayed (rendered) by the video displaying apparatus. To reduce server and client-side processing, this image is created not by cropping the source video, but by applying a masking operation to pixels outside the viewport area so that the entropy of the pixel values outside the viewport area is substantially reduced, e.g. a masking operation wherein the pixel values are modified such that they represent a uniform colour, e.g. green. Alternately and/or in addition, the masking operation may include replacing pixels outside the viewport area with a low-resolution version, e.g. a down-sampled version, the of original video frame. Using one of the video encoders generally applied in the art, this will reduce the size of the encoded image drastically, leading to only a minimal data overhead, which may be as low as 4%, compared to a cropped image in which only the non-masked part of the image is transmitted. No or at least minimal functionality at the client side is needed to render the masked image on the display because the client will still receive video data of the original dimensions in the original projection. Moreover, the masking process may be implements based on an efficient pre-encoding step before the video frame is offered to the input of the encoder apparatus. In an embodiment, the mask may be adjusted using the viewpoint information received from the client at a rate that is equal to the framerate of the source video.

In an embodiment, the video frame may be a projected video frame, wherein the projected video frame may comprise spherical video data representing pixels associated with a spherical video image projected onto a 2D rectangular area of a video frame using a projection model. Further, in an embodiment, the viewing direction information may include a viewpoint, wherein the viewpoint defines the position of the FOV region and the viewport region in the spherical video image. In an embodiment, the projection model may be based on an equirectangular projection, a cylindrical projection, a cubic projection, a fisheye projection or a pyramidal projection. The video frame may be a projected video frame, which may be formed by projecting spherical video data representing pixels on a virtual spherical surface, preferably a sphere, onto a 2D rectangular area of a video frame using on a projection model. Further, the viewport may define a bounded area on a spherical surface.

In an embodiment, the masking operation may include: modifying at least part of the pixel values of pixels outside the viewport region into modified pixel values, the modified pixel values being a single predetermined value or the modified pixel values forming a regular pattern and/or periodical pattern; and/or, modifying at least part of the pixel values of pixels outside the viewport into modified pixel values representing a low-resolution version of the pixel values.

In an embodiment, the video frame may be a projected video frame, the projected video frame comprising spherical video data representing pixels associated with a spherical video image projected onto a 2D rectangular area of a video frame using a projection model. In an embodiment, the viewing direction information may include a viewpoint, the viewpoint defining the position of the FOV region and the viewport region in the spherical video image. In an embodiment, the projection model may be based on an equirectangular projection, a cylindrical projection, a cubic projection, a fisheye projection or a pyramidal projection.

In an embodiment, determining mask information may include: using the projection model to determine a pixel mapping between a position of a pixel of the projected video frame and a position in the spherical video image; and, using the position of the viewport in the spherical video image and the pixel mapping to determine pixels of the projected video frame that are located outside the viewport region.

In an embodiment, determining masking information may further include: using the projection model to project the viewport region onto the 2D rectangular area of the projected video frame; using the projected viewport and pixels of the projected video frame to determine pixels of the projected video frame that are located outside the viewport region.

In an embodiment, the position of the viewpoint region may be based on angular coordinate system, preferably a spherical coordinate system.

In an embodiment, the viewport region may be larger than the FOV region. The region inside the viewport region and outside the FOV region may define a spatial viewport buffer SVB. In an embodiment, the dimensions of the viewport region may be selected based on the bandwidth available for transmitting the encoded masked video frame to the video player apparatus and/or based on a latency time associated with the transmission of the encoded masked video frame to a decoding apparatus associated with the client apparatus and the reception of the encoded masked video frame by the client apparatus.

In a further embodiment, the FOV region comprises pixels of a first resolution and the SVB comprises pixels of a second resolution, the first resolution being higher than the second resolution. Thus, in order to save bandwidth and simultaneously keep some of the advantages of a sufficiently large SVB (such as the advantages of a low motion-to-photon latency), the pixels in the SVB may be downgraded in quality.

In one embodiment, this may be done by executing one or more of the following steps: creating a first projected video frame, representing a low-quality representation of an original projected video frame based on temporal, spatial, and/or lossy compression (depending on the use case); optionally, scaling up the first projected video frame to the size of the original projected vide frame, determine an area representing a field of view (FOV) in the first projected video frame and the field of view (FOV) the original projected video frame and replace pixels in the field of view of the first (low-resolution) projected video frame by corresponding pixels in the field of view of the original (high-resolution) projected video frame thus forming a dual-resolution video frame including a low-resolution (downsampled) projected video frame comprising a high-resolution field of view; and, determining a processed (masked) video frame by applying a masking operation to the first projected video frame, the mask operation masking pixels outside a viewport, the field of view being located within the viewport, the area between the viewport and the field of view defining the spatial viewport buffer (SVB), wherein the pixels of the SVB are low resolution pixels and the pixels of the field of view (FOV) are high resolution pixels.

In an embodiment, the viewpoint information and/or the encoded masked video frame may be transmitted over a low-latency communcation channel between the video processing apparatus and the client apparatus. In an embodiment, the low-latency communication channel may be a bidirectional communication channel. In another embodiment, the bidirectional communication channel may be based on the WebSocket standard. In an embodiment, at least part of the encoded masked video frame may be transmitted as NAL units in decoding order to the client apparatus.

In an embodiment, the method may further include: associating a time instance to the reception of the viewpoint information; storing the viewpoint information and the time instance, preferably a time stamp, in a database; and, using the viewpoint information stored in the database for predicting a position of one or more further viewports.

In an embodiment, the viewpoint information may further include at least one of: information defining the dimensions and/or shape of the viewport, video frame reference information, e.g. a video frame sequence number and/or a presentation time stamp (PTS) associated with a masked video frame, a latency time, e.g. a motion-to-high-quality (MTHQ) latency time.

In an embodiment, the encoder apparatus may encode the masked video frame based on a predetermined video coding standard. In an embodiment, the video coding standard may include one of H.264, H.265, HEVC, VP8, VP9, AVC1, or AVC2.

In an embodiment, the video encoder or a processor may store the encoded video data in a data container. In an embodiment, the data container may be one or more ISOBMFF data containers and/or one or more Fragmented MP4 containers. In an embodiment, the encoded masked video frame may be transmitted to the client apparatus based on at least one of the following video streaming protocols: WebRTC, RTP, RTMP, or an adaptive streaming protocol, preferably an HTTP adaptive streaming protocol such as MPEG DASH, HTTP Live Streaming, HTTP Dynamic Streaming or HTTP Smooth Streaming.

In an aspect, the invention may relate to a video processing apparatus, comprising: a computer comprising a computer readable storage medium having at least part of a program embodied therewith; and a processor, preferably a microprocessor, coupled to the computer readable storage medium, wherein responsive to executing the computer readable program code, wherein the processor may be configured to perform executable operations. In an embodiment, the executable operations may include: receiving a decoded video frame, the video frame comprising video data representing a video image, the video data including pixels, wherein each pixel is associated with a pixel value representing a brightness and/or colour value; receiving viewpoint information from a client apparatus associated with a display, the viewpoint information including viewing direction information defining a viewing direction of a user of the display; the viewing direction information being associated with a field of view, FOV, region and a viewport region in the video image, the FOV region defining a region which can be rendered on the display and the viewport region defining a region in the video image that includes the FOV region; determining mask information, the mask information indicating for each pixel of the decoded video frame if a pixel is located outside the viewport region; using the mask information to transform the decoded video frame into a decoded masked video frame by applying a masking operation to pixels outside the viewport region, the masking operation reducing the entropy of pixel values of at least part of the pixels outside the viewport region; and, providing the decoded masked video frame to the input of an encoder apparatus and, the encoder apparatus encoding the decoded masked video frame into an encoded masked video frame.

In a further aspect, the invention may relate to a client apparatus associated with a display comprising: a computer readable storage medium having computer readable program code embodied therewith, and a processor, preferably a microprocessor, coupled to the computer readable storage medium, wherein responsive to executing the computer readable program code, wherein the processor may be configured to perform executable operations comprising: determining or receiving at a first time instance first viewing direction information of a first viewing direction of a user of a display, the first viewing direction information being associated with a first field of view, FOV, region and a first viewport region in a video image, the video image being defined by pixels of a video frame, the FOV region defining a region in the video image which can be rendered by the display and the viewport region defining a region in the video image that includes the FOV region; the processor receiving viewpoint information from a client apparatus associated with a display, the viewpoint information including viewing direction information defining a viewing direction of a user of the display, the viewing direction information being associated with a FOV region and a viewport region in the video image, the FOV region defining a region which is rendered by the display and the viewport region defining a region in the video image that includes the FOV region; transmitting first viewpoint information to a video processing apparatus, the first viewpoint information comprising the first viewing direction information.

In an embodiment, the first viewpoint information may signal the video processing apparatus to generate one or more masked video frames on the basis of one or more decoded video frames, wherein pixels of a masked video frame which are located outside the first viewport region are masked pixels.

In an embodiment, the executable operations may further include determining or receiving at a second time instance, second viewing direction information defining a second viewing direction of the user, the second time instance being later than the first time instance, the second viewing direction information being associated with a second FOV region and a second viewport region in a video image; receiving one or more encoded masked video frames and processing the one or more encoded masked video frames, the processing including decoding the one or more encoded video frames into one or more decoded masked video frames and using the second FOV region to select pixels from the one or more decoded masked video frames for display by the display.

In a further embodiment, the executable operations may include transmitting second viewport information to the video processing apparatus if a part of the second FOV region is located outside the first viewport region or if the distance between a boundary of the second FOV region and a boundary of the first viewport region is smaller than a predetermined distance, the second viewpoint information comprising the second viewing direction information. In an embodiment, the second viewpoint information may signal the video processing apparatus to generate one or more masked video frames on the basis of one or more decoded video frames, wherein pixels of a masked video frame which are located outside the second viewport region are masked pixels.

In yet a further aspect, the invention may relate to a client apparatus associated with a display comprising: a computer readable storage medium having computer readable program code embodied therewith, and a processor, preferably a microprocessor, coupled to the computer readable storage medium, wherein responsive to executing the computer readable program code, wherein the processor may be configured to perform executable operations comprising: determining or receiving at a first time instance first viewing direction information of a first viewing direction of a user of a display, the first viewing direction information being associated with a first field of view, FOV, region and a first viewport region in a video image, the video image being defined by pixels of a video frame, the FOV region defining a region in the video image which can be rendered by the display and the viewport region defining a region in the video image that includes the FOV region;

sending first viewpoint information to a video processing apparatus, the first viewpoint information comprising the first viewing direction information, the first viewpoint information signalling the video processing apparatus or being used by the video processing apparatus to generate one or more masked video frames on the basis of one or more decoded video frames, the one or more pixels of a masked video frame which are located outside the first viewport region being masked pixels; preferably the masked pixels having a single pixel value or having pixel values forming a regular and/or period pattern; determining or receiving second viewing direction information defining a second viewing direction of the user, the second viewing direction information being associated with a second field of view FOV region and a second viewport region in a video frame; receiving one or more encoded masked high-resolution video frames and one or more encoded low-resolution video frames, each of the one or more encoded low-resolution video frames being a low-resolution version of the video frames that were used to generate the one or more masked high-resolution video frames; and, processing the one or more encoded masked video frames and the one or more encoded low-resolution video frames for rendering at least part of the low-resolution video frames and/or high-resolution video frames by the display.

In an embodiment, the processing may include receiving one or more encoded masked high-resolution video frames and one or more encoded high-resolution video frames, each of the one or more encoded high-resolution video frames being a low-resolution version of the video frames that were used to generate the one or more masked high-resolution video frames; and, processing the one or more encoded masked video frames and the one or more encoded low-resolution video frames for rendering by the display.

In an embodiment, the processing may include: decoding the one or more encoded masked video frames into one or more decoded masked video frames and decoding the one or more encoded low-resolution video frames into one or more decoded low-resolution video frames; using the second FOV region to select pixels from the one or more decoded masked video frames for rendering by the display; and, if a part of the second FOV region is located outside the first viewport region, then using the second FOV region to select pixels from the at least one or more one or more decoded low-resolution video frames for rendering by the display.

Hence, in this embodiment, non-masked low-resolution versions of the one or more masked video frames are sent along with the masked video frame to the client apparatus, so that if part of the FOV region includes masked pixels, the client apparatus may use the low-resolution video frames for rendering the video data. Alternatively, if part of the FOV region includes masked pixels, pixels of the low-resolution video frames may be used to replace masked pixels. This way, rendering of masked pixels is avoided or at least substantially reduced.

The invention will be further illustrated with reference to the attached drawings, which schematically will show embodiments according to the invention. It will be understood that the invention is not in any way restricted to these specific embodiments.

Brief description of the drawings

Fig. 1 depicts a flow diagram of processing spherical video data.
Fig. 2 depicts an example of an equirectangular projection and mapping of spherical video data.
Fig. 3 depicts an example of a cubic projection and mapping of spherical video data onto a video frame.
Fig. 4 depicts different projections and mappings of spherical video data onto a video frame.
Fig. 5A-5D depict a method of viewport-based processing of video data, in particular spherical video data, according to an embodiment of the invention.
Fig. 6 depicts a system for processing and streaming video data according to an embodiment of the invention.
Fig. 7 depicts flow diagram of a method of processing video data according to an embodiment of the invention.
Fig. 8 depicts flow diagram of a method of processing video data according to another embodiment of the invention.
Fig. 9 depicts a flow diagram of video streaming processes according to an embodiment of the invention.
Fig. 10 depicts a flow diagram of video streaming processes according to another embodiment of the invention.
Fig. 11 illustrates a masked video frame according an embodiment of the invention.
Fig. 12A and 12B illustrate the use of a spatial viewport buffer according to an embodiment of the invention.
Fig. 13 illustrates a process of masking a projected video frame according to an embodiment of the invention.
Fig. 14A and 14B illustrate a process of masking a projected video frame according to an embodiment of the invention.
Fig. 15 is a block diagram illustrating an exemplary data processing system that may be used in as described in this disclosure.

Detailed description

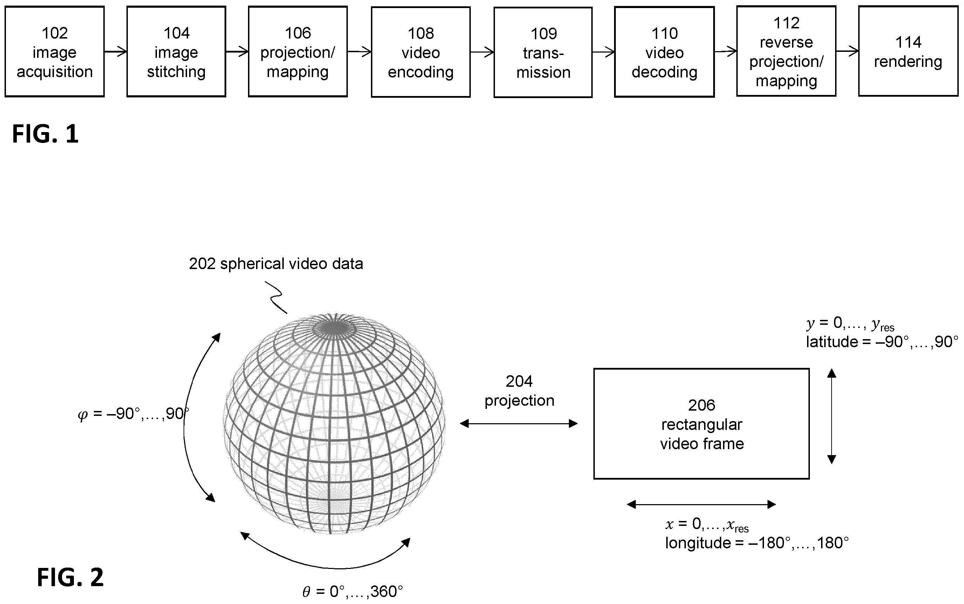

Fig. 1 depicts a high-level flow diagram of a method for processing spherical video content. The process may include the capturing of multiple images (step **102**) using a panoramic or omnidirectional image capturing system, which typically comprises multiple, i.e. two or more image sensors. Images of overlapping fields of view, generated by different image sensors, may be stitched together (step **104**) into one panorama or high-resolution image. The stitching of images into one image is a well-known image processing technique, that typically includes alignment and panorama composition. In the alignment process, feature descriptors may be extracted from images in order to find corresponding image features. The alignment is used to estimate the image camera position or orientation of each image. The panorama composition procedure subsequently uses this information for combining all images into one panorama image. Image blending may be used to seamlessly stich the thus combined images together. The stitching of the images may be in a 2D or 3D plane. For example, images may be stitched to each other onto a spherical surface thereby forming spherical video data, or they may be combined in a 2D plane to create an extra-high-resolution image.

Thereafter, the spherical video data may be transformed by projection, mapping and optional packing operations (step **106**) into 2D rectangular video frames, which are encoded by a state-of-the-art video encoder (step **108**). The encoded video data may be encapsulated into a transport container so that the video data can be transmitted (step **109**) to a playout device, which is configured to decode the video data (step **110**) into 2D rectangular frames. For presentation of the content to the user, the playout device renders a 3D (polyhedronic) object, and textures it with the video frames (step **114**). Depending on the projection that was used, the 2D rectangular frames are then transformed back into omnidirectional video data by reversing the packing, mapping and projection operations (step **112**). The encoding process **108** may be implemented in a video encoder apparatus and steps **110-114** may be implemented in a media playback device connected to or integrated in e.g. a head mounted display (HMD), which is configured to decode and render the encoded spherical video data. The transformation of the spherical video data by projection and mapping operations into 2D rectangular video frames (step **106**) is described in more detail with reference to **Fig. 2-4.**

**Fig. 2** depicts an example of an equirectangular projection operation **204** of spherical video data **202,** represented as pixels on a spherical surface (e.g. a sphere or a squished sphere), onto a rectangular 2D video frame **206.** This projection operation may be used to directly transform pixels associated with spherical coordinates $\varphi, \theta$ to pixels associated with planar 2D coordinates $x, y$. A video frame comprising projected spherical video data may be referred to in short as a projected video frame.

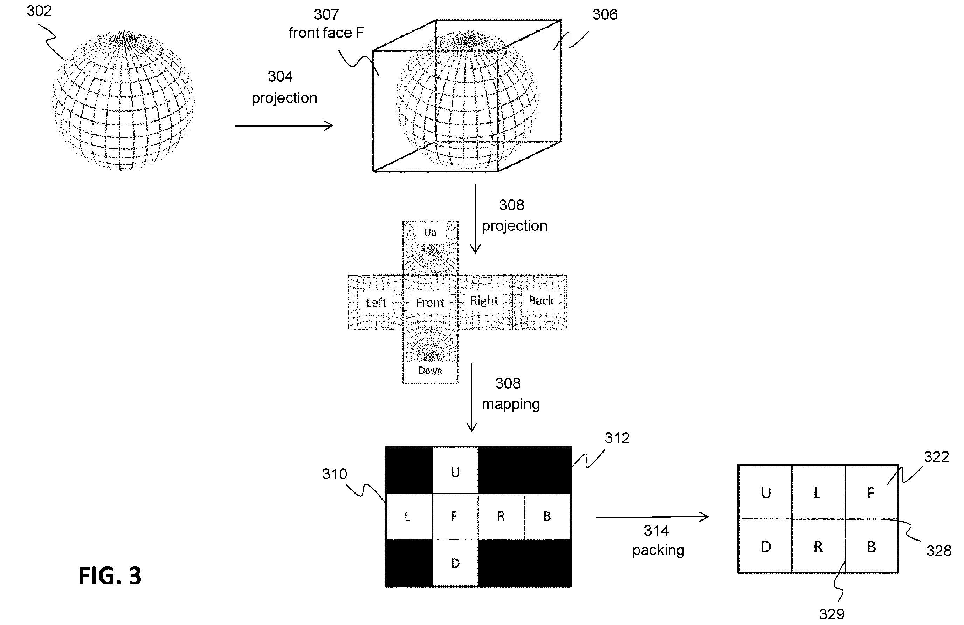

Similarly, **Fig. 3** depicts an example of projecting of spherical video data **302** onto a rectangular video frame using a cubic projection model. In particular, **Fig. 3** depicts a projection operation **304** of the spherical video data onto the faces **306** of a cube. These faces may be referred to as the 2D projection faces. The orientation of the sphere and the cube may be described using a 3D coordinate system such that different orientations of the sphere, the cube and the sphere relative to the cube can be defined. For example, in such coordinate system the cube faces may be labelled as front face (F), up face (U), down face (D), left face (L), right face (R) and back face (B). After the projection of the pixels onto the projection faces, the projection faces of the cube are mapped **308** onto a planar 2D rectangular video frame **312**. Here, the pixels belonging to a projection face may be referred to as a pixel region or, in short, a region. For example, the pixels associated with the front projection face F **307** of the cube may form pixel region F in the rectangular video frame **312.**

Hence, as shown in **Fig. 3,** during the mapping operation **308,** the cube comprising projected pixels on its faces may be unfolded and arranged in a rectangular 2D area forming a video frame. The thus formed video frame may be referred to as a projected video frame. A projected video frame comprises an arrangement of pixel regions wherein edges of pixel regions may form region boundaries. The pixel regions in the projected video frame may be rearranged and resized in order to remove black spaces. The process of rearranging the pixel regions may be referred to as packing **314.** The resulting projected video frame includes a 2D arrangement of pixel regions **322** including horizontally and vertically arranged region boundaries **328,329.**

More generally, transforming spherical video data into a rectangular video frame may include a projection of the spherical video data onto one or more 2D projection faces of a projection model, typically a 3D polyhedron such as a cube or a pyramid, followed by a mapping the faces onto a rectangular frame. The faces of the 3D projection model may be referred to as projection faces and a video frame resulting from the projection operation onto the projection faces may be referred to as a projected video frame. A projected video frame may include pixel regions (blocks of pixels) that match the 2D projection faces of the projection model that was used (e.g. the faces of a cube). The pixel regions are arranged to form a rectangular video frame wherein the edges of the pixel regions may form region boundaries of the projected video frame. A projected video comprising a packed arrangement of pixel regions may also be referred to as a region-wise packed video frame.

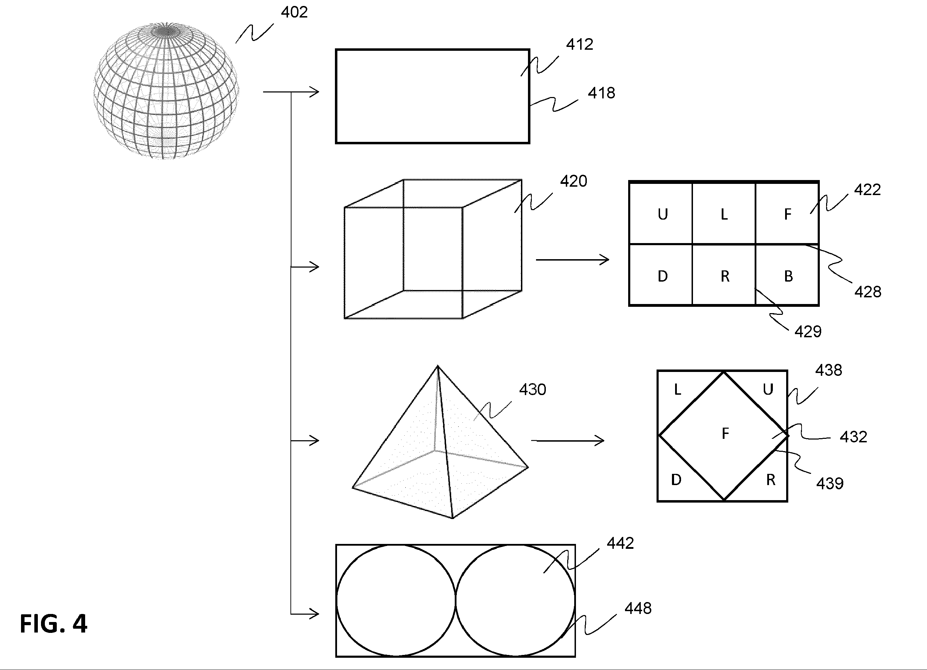

As shown in **Fig. 4,** depending on the selected projection model, i.e. equirectangular **412,** cubic **420,** pyramid **430,** fisheye **442,** etc. different arrangements of pixel regions **412,422,432,442** and associated region boundaries **418,428,429,438, 439,448** in the projected video frames may be obtained. The spherical video data **402** that is projected onto the projection faces is mapped and packed into a projected video frame wherein each projection face represents a pixel region of a predetermined geometry and wherein the boundaries of neighbouring pixel regions form artificial region boundaries. As shown in **Fig. 4,** depending on the projection type the region boundaries may have different orientations in the video frame. Many different projection types may be used including but not limited to a cylinder, a polyhedron (e.g. an octahedron or an icosahedron), a truncated pyramid, segmented sphere, etc.

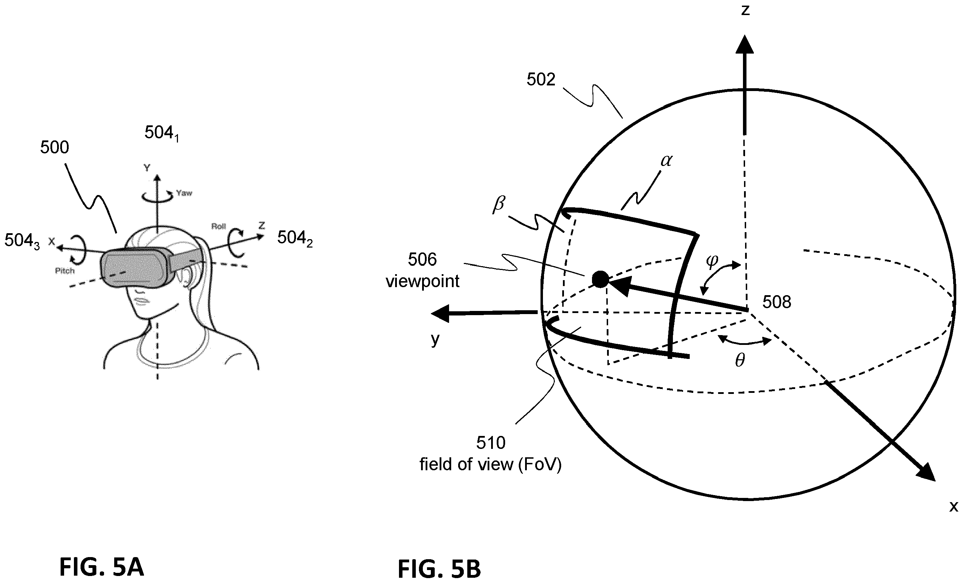

**Fig. 5A-5C** depict a method of viewport-based processing of video data, in particular spherical video data, according to an embodiment of the invention. **Fig. 5A** and **5B** depict a user wearing a video player apparatus **500.** A video player apparatus may refer to any apparatus comprising a processor, a memory and various functional modules for processing and playout of video data. A video player apparatus may be configured to request and receive spherical video data from a server or server network and to render spherical video data to the user of the video processing device. Here, spherical video data may be regarded as a spherical representation of video content onto a (virtual) spherical surface **502** as depicted in **Fig. 5B.** The position of the spherical video data, e.g. pixels, on the spherical surface and the viewing direction of the user may be defined on the basis of a suitable coordinate system e.g. a spherical coordinate system $504_{1-3}$. For example, a coordinates system based on pitch, yaw and roll coordinates may be used wherein the pitch represents a rotation $\varphi$ around the x-as, yaw a rotation $\theta$ around the y-axis and a roll a rotation $\omega$ around the z-axis.

A non-limiting example of such a video player apparatus is a head-mounted display (HMD) that is used for virtual reality and augmented reality applications. A video player apparatus may comprise one or more sensors for tracking head, eye and/or body position of a user, wherein the position may be defined on the basis of the coordinate system. The sensor information may be used by client software executed by the video player apparatus to determine a so-called viewpoint **506,** i.e. a position of a point on the virtual sphere defining the viewing direction of the user of the video player apparatus, wherein the user is positioned in the centre **508** of the virtual sphere and is looking towards the viewpoint on the spherical surface. The position of the viewpoint on the sphere may be expressed based on the coordinate system. The video player apparatus may be further characterized by a field of view (FOV) **510,** i.e. an area around the viewpoint on the virtual sphere defining spherical video, which the video player apparatus is able to display for a particular viewpoint at a given time instance. When a user changes its viewing direction, the position of the viewpoint and the associated FOV on the virtual sphere changes accordingly. The viewing direction represented by the viewpoint and the associated FOV determines area of pixels on the virtual sphere that the video player apparatus renders at a particular time instance. The FOV on the virtual sphere thus determines the pixels that are located within to the FOV. An area of pixels on the virtual sphere that includes the pixels of the FOV may define a so-called viewport **512.** Typically, the viewport defines the area of pixels on the virtual sphere that are processed at a particular time instance by the video player apparatus for rendering. The viewport may be larger than the FOV so that the generation of video artefacts due to transmission delays and/or fast head and/or eye movements of the user can be reduced.

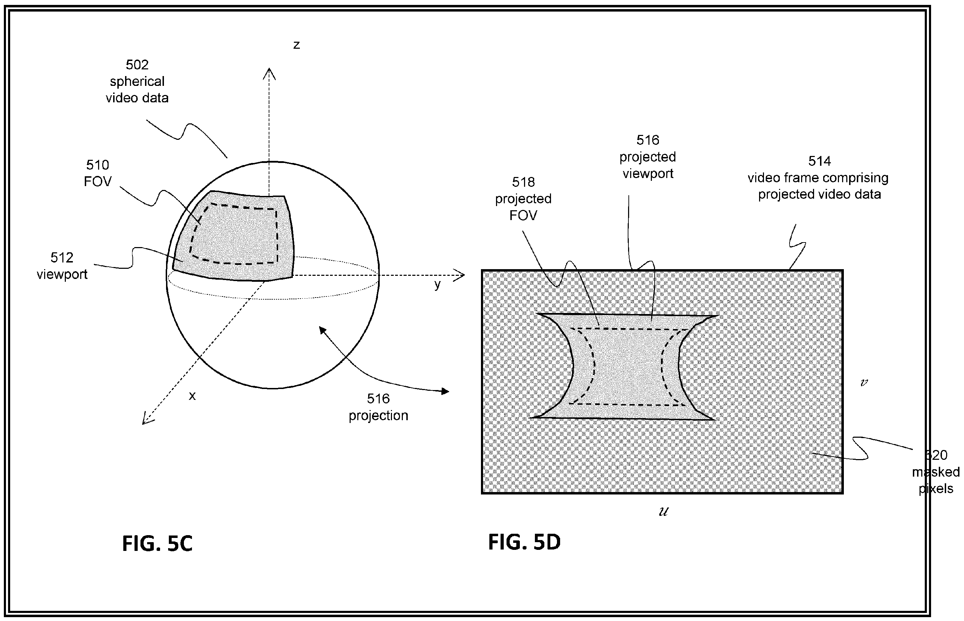

**Fig. 5B** and **Fig. 5C** illustrates a FOV and an associated viewport defined on the basis of a predetermined coordinate system. A yaw-pitch-roll Euler angle convention system may be used to represent the rotation of the viewer heads in a 3D Cartesian coordinate system. A radius, elevation, azimuth angular coordinate system (also known as spherical coordinate system) may be used to represent regions on the sphere. Here, the azimuth ranges between 0 and 360 degrees, and elevation range between -90 and +90. The starting (0-degrees) position of the yaw axis may be chosen arbitrarily by a content provider, or be consistent with the cardinal directions with 0 and 360 degrees representing North, 90 degrees representing East, 180 degrees representing South and 270 degrees representing West. For the pitch axis, the positive values may represent direction above the horizon and negative values represent directions below the horizon. For the roll axis, the assumption may be made that positive values indicate that the left eye of the user is higher than the right eye, and conversely negative values indicate that the user's head is tilted in the opposite way (with the left eye being lower than the right eye).

In an embodiment, three angular parameters (a spherical viewpoint coordinate) may be used to indicate the position of the viewport on the sphere. In an embodiment, the three elevation-azimuth-orientation angles $(\theta, \varphi, \omega)$ may be used to indicate the direction of the viewport (the center of the viewport being located on the sphere at the position $r, \theta, \varphi$) and the orientation $\omega$ (roll) of the viewport. The boundaries of the viewport may be preconfigured in the client device or may be determined by the client device based on the FOV. Additionally, the boundaries of the viewport may be based on information on where the viewport needs to be projected.

In an embodiment, the FOV and/or the associated viewport on a sphere may have the shape of a spherical polygon. For these polygons, it holds that each side is defined a line segment of a great-circle. For example, the viewport **512** (and FOV **510**) depicted in **Fig. 5C** illustrates a spherical polygon that has the shape of a rectangular on a sphere. A number of angular coordinates may be used to define a such rectangular spherical polygon. For example, five angular coordinates may be used to define a rectangular viewport on the sphere, including: $\theta, \varphi, \omega$, the three elevation-azimuth-orientation angles to indicate the viewpoint (the viewpoint being the center of the viewport on the sphere at a position $r, \theta, \varphi$) and the orientation of the viewport $\omega$ and the parameters $\alpha, \beta$: where $\alpha$ represents the viewport's "width" in degrees of arc and $\beta$ represents the viewport's "height" in degrees of arc. Here the height $\beta$ may be defined as a segment on the great-circle passing through the viewport's center and having bearing equal to $\omega$. Similarly, the width $\alpha$ may be defined as a segment that is located on the great-circle passing through the viewport's center and substantially orthogonal to the great-circle associated with the height $\beta$.

In order to allow a video player apparatus to process (e.g. encode or decode) spherical video data, spherical video data (pixels) may be projected on a 2D rectangular area of a video frame using a projection model. This is schematically depicted in **Fig. 5C** and **5D,** which illustrates a video frame **514** comprising spherical video data which are projected based on a predetermined projection model, e.g. equirectangular or cubic, onto a 2D rectangular area. Thus, the video processing device typically receives spherical video data from e.g. a media server in the form of projected video data, e.g. equirectangular projected video data. The projected video frame thus comprises spherical video data as a projection of pixels on spherical surface. The projection model may be used to project the viewport on the virtual sphere onto the 2D rectangular area in order to generate a projected viewport **516.** The projected viewport **516** may define a bounded area of pixels in a 2D rectangular video frame that is rendered by the video player apparatus. Similarly, the FOV on the virtual sphere may be projected to form a projected FOV **518** which is located within the projected viewport. The projected viewport may form a region of interest (ROI) in the projected video frame.

As shown in **Fig. 5D,** only the pixel values within the bounded area defined by the projected FOV will be rendered to the user of the video player apparatus. Thus, in principle, pixels outside the projected viewport (the ROI) are redundant. A server transmitting all video information (all pixels) of a projected video frame to video processing devices therefore results in a substantial waste of bandwidth, especially in case of high-definition 360 video. As will be described hereunder in more detail, the embodiments described in this disclosure aim to reduce transmission of redundant video data without the need to introduce substantial changes to the video player apparatus. The invention includes the application of a masking operation by a video processing apparatus to pixels of a video frame or a projected video frame if the pixels are located outside the viewport. The masking operation may transform a pixel into a masked pixel **520,** wherein the masking operation may include changing pixel values to one predetermined pixel value or to a regular pattern of pixels (e.g. a repetitive pattern). Changing the pixel values to a pixel pattern of a low-entropy (e.g. a single pixel value or a regular pixel value pattern) allows very efficiently video compression by state-of-the-art video coding standards. Here, the entropy of (part of) an image may be calculated based on the well-known Shannon entropy $H = -\sum_{i=1}^{n} p_i \, log_2 p_i$ wherein the $p_i$ value represents the number of occurrences of pixel values having intensity level i divided by the total number of intensity levels.

The masking operation may be performed by a video processing apparatus before encoding the video frame so that the amount of information that needs to be encoded by the encoder can be significantly reduced. The masking operation may be performed dynamically, i.e. during video streaming, wherein during streaming a user may change e.g. its viewing direction. In that case, the position of the FOV on the virtual sphere and thus the pixels that are outside the FOV will change in time. The masking operation may be performed by a video processing apparatus, e.g. a server which is configured to apply the masking operation to decoded (raw) video frames before encoding the masked (projected) video frames into a bitstream.

The concept of viewport-based video processing and rendering as described with reference to **Fig. 5A-5C** may not only be used with spherical video data but also with 2D video data, e.g. such zooming into an area of a high-resolution video frame representing a panoramic video scene.

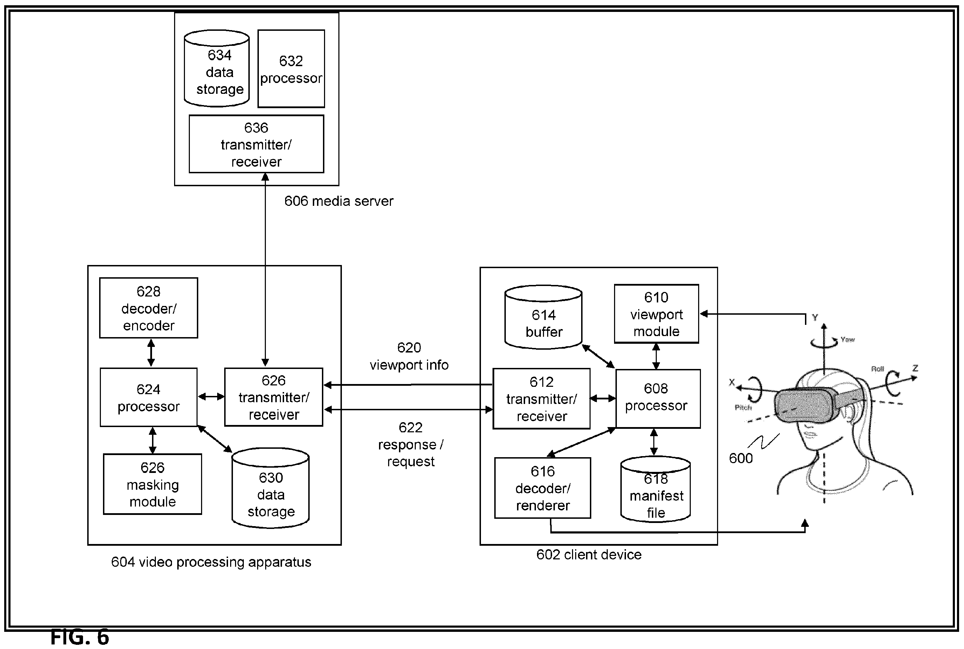

**Fig. 6** depicts a system for processing and streaming video data according to an embodiment of the invention. As shown in this figure, the system may include a video processing apparatus **604,** e.g. a server, and video player apparatus **600** comprising or associated with a client device **602.** For example, the client device may be part of or associated with a video player apparatus as e.g. described with reference to **Fig. 5A-5C.**

The client device may include different functional modules or units which may be controlled by at least one processor **608.** For example, the client device may include a transceiver module **612** for transmitting and receiving data, typically video data. The transceiver module may include a radio interface for setting up and managing a wireless data connection with the video processing apparatus. The client device may be configured to request the video processing apparatus to transmit video data to the client device and to receive the requested video data from the video processing apparatus. The client device may include a buffer **614** for (temporarily) storing video data and associated metadata. The client device may further comprise or be associated with a media engine module **616** which may comprise a video processor, e.g. graphical processing unit (GPU), for executing one or more decoder instances to decode encoded video data (video frames) into video pictures. The media engine module may further comprise a video rendering engine configured to render the video pictures to a user. The encoded video data may be transmitted in one or more video streams to the client device, wherein each video stream may include a sequence of encoded video frames.

The client device may further comprise a viewport module **610** configured to receive information about position of the (head of the) user and/or the viewing direction. Sensor information generated by one or more sensors, e.g. a 3D position sensor and/or one or more eye-tracking sensors, may be used to determine viewpoint information, which may include a viewing direction of the user. The viewport module may send the viewpoint information **620** to the video processing apparatus.

In an embodiment, it may regularly (periodically) send the viewpoint information to the server. The viewpoint information may be transmitted to the video processing apparatus so that it able to continuously monitor the viewing position of the viewer. In another embodiment, the viewport module may send the viewpoint information to the video processing apparatus when a condition or certain conditions are met. The viewpoint information may comprise information defining viewing direction of the user in the form of a viewpoint. In case of processing spherical video data, the viewpoint may define a point on a (virtual) sphere defining the viewing direction of a user, which is located at the centre of the sphere (looking in the direction of the viewpoint) as described with reference to **Fig. 5A-5C.** The viewing direction may be defined based on angular (spherical) coordinates. Additionally, in some embodiments, the viewpoint information may include size information, e.g. viewing angles defining the dimensions and, optionally, the shape, of a viewport on the sphere associated with the viewpoint.

The video processing apparatus may include different functional modules or units which may be controlled by at least one processor **624.** For example, the video processing apparatus may include a transceiver module **624** for transmitting and receiving data, typically video data. The transceiver module may include a radio interface for setting up and managing a wireless data connection with the client device and one or more further media servers **606.**

Video processing apparatus **604** may include a first media server including a data storage **630** for storing video data and associated metadata. Alternatively, and/or in addition, video processing apparatus **604** may be configured communicate with one or more second media servers **606.** Each of the media servers may include a data storage **634,** a processor **632** and transceiver module **636** for establishing data communication with the video processing apparatus. Thus, when the video processing apparatus receives a request for video data from a client device and if the requested video data are stored in the storage of the video processing server, it may process the requested video data based on the viewpoint information of the requesting client device and subsequently transmit the processed video data to the client device. Alternatively, it may relay the client request for video data to the media server, which may transmit the requested video data to the video processing server. The video processing server may receive the video data, decoded the video data if the media data are encoded, process the video data on the basis of the viewpoint information and transmit the processed video data to the client device.

Thus, before transmitting video data to a client device, the video processing server processes the requested video data on the basis of viewpoint information **620** of the client device that requested the video data. As described above, the viewpoint information includes a viewing direction of the user of the video processing device. In case of conventional 2D video data, the viewport may define area in a video picture represented by pixels of a video frame in which a user would like to zoom in. Similarly, in case a spherical video (typically represented as pixels positioned on a virtual sphere) a viewing direction may be associated with a viewpoint in video picture on a sphere.

The viewpoint may be used to determine the video data to be rendered by the video processing device. Spherical video data are typically projected onto a 2D rectangular area of a video frame based on a projection model so that it can be processed (encoded and decoded) by a state of the art video coding system. Thus, in order to determine pixels that need to be rendered by the video player apparatus, either pixels of a projected video frame are transformed to pixels on a virtual sphere, which are subsequently compared with the viewport on the virtual sphere. Alternately, the viewport is projected onto the projected video frame using the projection model that was used to project the spherical video data onto the 2D rectangular area of a video frame. The projected viewport may define a bounded area of pixels in the projected video frame which is referred to a ROI. The pixels in the ROI are then selected for rendering by the video player apparatus.

The video processing apparatus may further comprise a masking module **626** that is configured to determine on the basis of the viewpoint information which pixels in a projected video frame are part of a ROI. The masking module may include an algorithm which relates a pixel in the projected video frame to a pixel on the virtual sphere, wherein the location of such pixel on the sphere may be defined based on spherical coordinates. Comparison of the location of the pixels on the sphere and the location of the viewport on the sphere (as contained in the viewpoint information that is sent by a client device to the video processing device) allows the masking module to decide to which pixels a masking operation should be applied to. After the application of the masking operation to the pixels outside the viewport a masked video frame may be generated which may be encoded by a video encoder and transmitted to the client device using a suitable transport protocol. As the masked video frame includes a projected viewport area wherein pixels outside the viewport area are masked by transforming pixel values to a single value or to a regular pattern, the masked video frame can be efficiently coded.

This process may be repeated for each video frame, wherein the position of the viewport may change if the user changes its viewing direction. In some embodiments, the edge server may process video data received from the media server. In case, the video data received from the media data are encoded, the edge server may first decode the video data into decoded (raw) video frames that can be processed by the masking module.

In an embodiment, the server may be a so-called edge server, i.e. a server which is located at the edge of a network. An edge server may for example be co-located with a base station of a wireless telecommunication network. This way, the edge server is physically located relatively close to client devices that are connected to the base station. This way a fast, low-delay data connection may be established between the edge server and a client device. For example, the connection between the edge server and the client device may e.g. be based on the 5G standard having a latency lower than the motion-to-high-quality latency that is required to enable an immersive experience by the user of the video processing device. For example, a Mobile Edge Computing or Multi-access Edge Computing (MEC) unit may be used wherein storage, networking resources and data processing, such as the video processing described with reference to the embodiments in this disclosure, may be integrated or associated with a base station, e.g. an eNodeB, that is part of a radio access network (RAN). This way, computer intensive and latency sensitive applications like 360 video and augmented reality applications may be hosted at the edge of the network. The connection between the edge-server and the client device thus provides a low motion-to-high-quality latency data communication channel.

Various video streaming protocols, e.g. RTP (over UDP) or an adaptive streaming protocol such as MPEG-DASH, may be used to transmit the processed video data, including the masked video frames, to a client device.

Video data may be stored as video steams on a media server. Spherical video data may be formatted into video frames wherein the spherical video data is projected onto the 2D area of video frames based on a projection model. Metadata associated with the video data, e.g. stream identifiers (e.g. URLs or URIs) and - in the case of spherical video - the projection and mapping method used for generating projected video frames, and, optionally, the relation between different streams may be stored in a so-called manifest file. In an embodiment, metadata may be provided in a manifest file to the client device, which may store the manifest file **618,** e.g. an MPD, in a memory. In case of tiled video, the manifest file may include one or more tile stream identifiers for identifying one or more tile streams. Examples of tiled spherical media are described with reference to WO2018/069466, which is herewith incorporated by reference into this application. When using MPEG-DASH for video streaming, the manifest file may be referred to as a media presentation description (MPD). The media sources may be adapted to stream video data on the basis of a streaming protocol to a video processing device.

Each tile stream comprising spherical video data of a subpart (a tile) of the surface of a sphere. This way each subpart may define a spherical tile at a predetermined position on the sphere. The manifest file may further comprise spatial description information for signaling the client apparatus information on the (static) position of the tiles on the sphere and projection information for signaling the client apparatus about the type of 2D projection (e.g. equirectangular, cubic, etc.) that is used for representing the spherical video data in a bitstream.

In some embodiments, the video processing apparatus may also be configured to generate a low-resolution version of the video frames which are processed by the video processing apparatus. In that case, the video processing apparatus may transmit both the masked video frames and the low-resolution video frames in one or more video streams, e.g. a first video stream comprising encoded masked video frames and an associated second video stream comprising the encoded low-resolution video frames, to a client device. Timing information for synchronizing video playout of the masked and low-resolution video pictures may be added as metadata to the video streams. For example, time line descriptors such as Timeline and External Media Information (TEMI) descriptors known from the MPEG-standard may be used to send timeline information to the client device. In that case, the client device may start at least two decoder instances for decoding the encoded masked video frames into masked video pictures and the encoded low-resolution video frames in to low-resolution video pictures. In an embodiment, the client device may use the low-resolution video pictures for post-processing decoded masked video frames in case of fast movements of the viewing direction (and thus the viewport) in which the current location of the FOV on the virtual sphere is partially outside the position of the viewport on the virtual sphere of the masked video picture the client device is processing.

As described above, the masking module of the video processing apparatus may execute an algorithm to determine pixels in a projected video frame that are outside the viewport. This algorithm may hereafter be referred to as the Projection Normalization Algorithm (PNA). Different masking algorithms associated with different projected models may be used. In these algorithms, a scene may be viewed using a video player apparatus that may have up-to-3 degrees of freedom, e.g. a head-mounted display. Sensors of the video player apparatus may generate viewpoint information, that includes coordinates, e.g. coordinates of a viewport, that may be used for input to the PNA algorithm. Additionally, other parameters associated with the video player apparatus such as view constraint angels (defining the dimensions viewport) may be used as input to the PNA algorithm:

- a set of (pitch, yaw, roll) rotation angles ($\theta, \varphi, \omega$) defining the viewpoint, which typically is the center of the viewport, and
- a set of (horizontal, vertical) field of view constraint angles ($\alpha, \beta$) defining the boundaries of the viewport.

In the case of less than three degrees of freedom, rotation variables can be set to a constant value beforehand. For example, when roll is prohibited, the roll parameter can be set to zero. The user may also be allowed to zoom, effectively changing the field of view constraint angles. As a general output, the PNA will provide $l_c \in \mathbb{R}^3$, a point on the unit sphere (a sphere with radius 1) that corresponds with the centre of the FOV of the user, in a normalised coordinate system.

For every pixel $s$ of the 2D (projected) video frame, the PNA is defined such that the following output is obtained:

- $l_s \in \mathbb{R}^3$, a mapped location of the input pixel on the unit sphere (inverse projection);

- $l_s' \in \mathbb{R}^3$, a counter-clockwise rotation of $l_s$ of $\omega$ radians around the axis from the origin through $l_c$, the centre of the field of view on the unit sphere; $(\varphi_s, \theta_s)$, the angular coordinates (yaw, pitch) of $l_s'$ on the unit sphere.

In an embodiment, the counter-clockwise rotation to eliminate the roll may be implemented as follows. Given a (yaw, pitch) of $(\varphi, \theta)$, the centre of the viewport, i.e. the viewpoint, on the unit sphere may be represented by $l_c = (\cos\theta\cos\varphi; \sin\theta, \cos\theta\sin\varphi)$. The rotation matrix over $\omega$ radians around the axis from the origin through $l_c$ may then be given by:

$$R(l_c, \omega) = \cos\omega\ I + (1 - \cos\omega)\ l_c \otimes l_c + \sin\omega\ [l_c]_\times,$$

where $I$ is the identity matrix and $[l_c]_\times$ is the cross-product matrix of $l_c$. Applying this rotation matrix to $l_s$ yields

$l_s' = R(\omega, l_c)\ l_s$. The angular coordinates then follow as $\varphi_s = \arctan2(l_{s,z}', l_{s,x}'), \quad \theta_s = \arcsin(l_{s,y}').$

In an embodiment, the spherical video data may be projected using an equirectangular projection. In such an embodiment, the inverse projection $l_s$ of a pixel $s$ may be obtained by:

$$l_s = \begin{pmatrix} \cos(\theta_i)\cos(\varphi_i) \\ \sin(\theta_i) \\ \cos(\theta_i)\sin(\varphi_i) \end{pmatrix},$$

where $\varphi_i = (0.5 - u_i)\ 2\pi$ and $\theta_i = (v_i - 0.5)\ \pi$, with $u_i = x_i/x_{\text{res}}$ and $v = y/y_{\text{res}}$, in which $(\varphi_i, \theta_i)$ are coordinates of the video sphere in radians and $(x_i, y_i)$ are the pixel coordinates in the video frame's two-dimensional pixel array.

Other projection models of the spherical video data may be used as well. In an embodiment, the spherical video may be projected using a fisheye projection, e.g. equidistant, stereographic, equisolid-angle, or orthographic fisheye projection. In an embodiment with equidistant projection, the inverse projection $l_s$ of a pixel $s$ may be obtained by the following calculations.

In case of a fisheye projection, the projected video frame is known to comprise two or more so-called fisheye areas $F_0, F_1, ..., F_n$. For each fisheye area $F_i$, the following properties may be specified:

- $\vec{c}_i = (x, y) \in \mathbb{R}^2$, the centre of the fisheye area $F_i$ in the projected video frame,

- $r_i \in \mathbb{R}$, the radius of the fisheye area $F_i$ in the projected video frame,

- $\rho_i \in [0, \pi)$ the angular size of the fisheye area $F_i$ on the viewing sphere,

- $\vec{t}_i = (\varphi_i, \theta_i) \in \mathbb{R}^2$, the centre of the fisheye area $F_i$ on the viewing sphere, defined by a set of yaw and pitch angles respectively;

- $\omega_i \in \mathbb{R}$, the roll of the fisheye lens corresponding to $F_i$.

For each fisheye area $F_i$, the set $P_i$ of pixels $\vec{s} \in S = (s_x, s_y) \in \mathbb{Z}^2$ inside that area are obtained as follows:

$$P_i = \{\vec{s}: |\vec{s} - \vec{c}_i| < r_i\}$$

Using these sets, pixels not in $\bigcup_{i=0}^{n} P_i$ are by necessity outside the viewport and may be excluded from further viewport analysis.

In order to determine for each pixel $\vec{s}$ in each fisheye area $F_i$ whether it should be included in the output, the location of $\vec{s}$ on the viewing sphere is determined, considering the properties of the fisheye lens corresponding to $F_i$. First, an angular rotation vector (roll, pitch) is obtained as follows:

$$\omega_{s'} = \arctan2(-s_y, s_x) - \omega_i$$
$$\theta_{s'} = -\frac{s_y}{\rho_i} - \frac{\rho_i}{2} - \theta_i$$

Projecting the angular rotation vector onto a unit sphere yields a point *s'* on the unit sphere:

$$s' = \begin{pmatrix} s'_x \\ s'_y \\ s'_z \end{pmatrix} = \begin{pmatrix} \cos(\theta_{s'}) \\ \sin(\omega_{s'})\sin(\theta_{s'}) \\ \cos(\omega_{s'})\sin(\theta_{s'}) \end{pmatrix}$$

Using *s'*, the lens yaw $\varphi_i$ can be compensated for by rotating *s'* $\varphi_i$ radians clockwise around the *y*-axis, using the following rotation matrix:

$$R_y = CW\big((0,1,0), \varphi_i\big) = \begin{bmatrix} \cos\varphi_i & 0 & -\sin\varphi_i \\ 0 & 1 & 0 \\ \sin\varphi_i & 0 & \cos\varphi_i \end{bmatrix}$$

A point $l_s$ on the unit sphere is then obtained as follows:

$$l_s = R_y \cdot s'$$

In a further embodiment, the spherical video may be projected onto a rectangular area of a video frame using a cubic projection. In such an embodiment, the inverse projection $l_s$ of a pixel *s* may be obtained by the following calculations. Consider a cube centred around the origin, with 6-faces $F_0,...,F_5$ where preferably each face is aligned with two axes. Each face is associated with image data laid out in the projected video frame in non-overlapping segments. In this scenario, the following input information for each face $F_i$ may be provided:

- $\vec{c}_i \in \mathbb{R}^3$, the top-left corner of $F_i$.
- M, a 3×2 matrix indicating a linear mapping of a 1×1 2D plane onto $F_i$.
- $o^2 \in \mathbb{Z}^2$, the top-left corner of the 2D segment in the 2D image.
- The width $w_i$ and height $h_i$ of the 2D segment.

For example, the face along the positive x,z-axes with the top-left corner at (1,0,1) and the centre at the origin has the following values (resulting in a cube of size 2):

$$\vec{c}_i = (1,0,1)$$

$$M = \begin{bmatrix} -2 & 0 \\ 0 & 0 \\ 0 & -2 \end{bmatrix}$$

For each cube face $F_i$, and for each pixel $s \in F_i$, *p* may be projected onto $F_i$ using M:

$$s' = \vec{c}_i + M \begin{pmatrix} (s_x - o_x)/w_i \\ (s_y - o_y)/h_i \end{pmatrix}$$

Using *s'*, $l_s$ may be obtained by projecting *s* onto the unit sphere using e.g. a gnomonic projection by constructing the unit vector corresponding to s':

$$l_s = \frac{s'}{|s'|}$$

In an embodiment, a mask may be determined based on the viewport using the view orientation information $(\theta, \varphi, \omega)$ from the client device. For each pixel in the projected video frame, the angular coordinates $(\varphi_s, \theta_s)$ of its position on the unit sphere may be determined by applying the PNA. In this case, it suffices to compare the angle difference with the viewport in two dimensions (yaw and pitch) instead of three because the roll has been cancelled out in the calculation of $l'_s$. Given the angular width of the horizontal and vertical field of view of the user $(\alpha, \beta)$ and given the yaw $\varphi$ and pitch $\theta$ angles of the viewer, the pixel associated with $(\varphi_s, \theta_s)$ is inside the field of view if and only if:

$$\left(\pi - \left|\pi - |\varphi_s - \varphi|\right| < \frac{\alpha}{2}\right) \wedge \left(|\theta_s - \theta| < \frac{\beta}{2}\right),$$

where all angles are given in radians. The non-masked part of the image should at least contain all pixels of which at least a part is contained inside the viewport.

By performing this test for every pixel in the video frame, the pixels to be masked can be selected and a masked video frame can be generated accordingly. The calculation of $l_s$ needs to be done only once for each pixel location on the projection area; if $\omega$ is fixed, $(\varphi_s, \theta_s)$ can also be calculated and stored. This way the source content does not have to be projected on a sphere first which saves processing power.

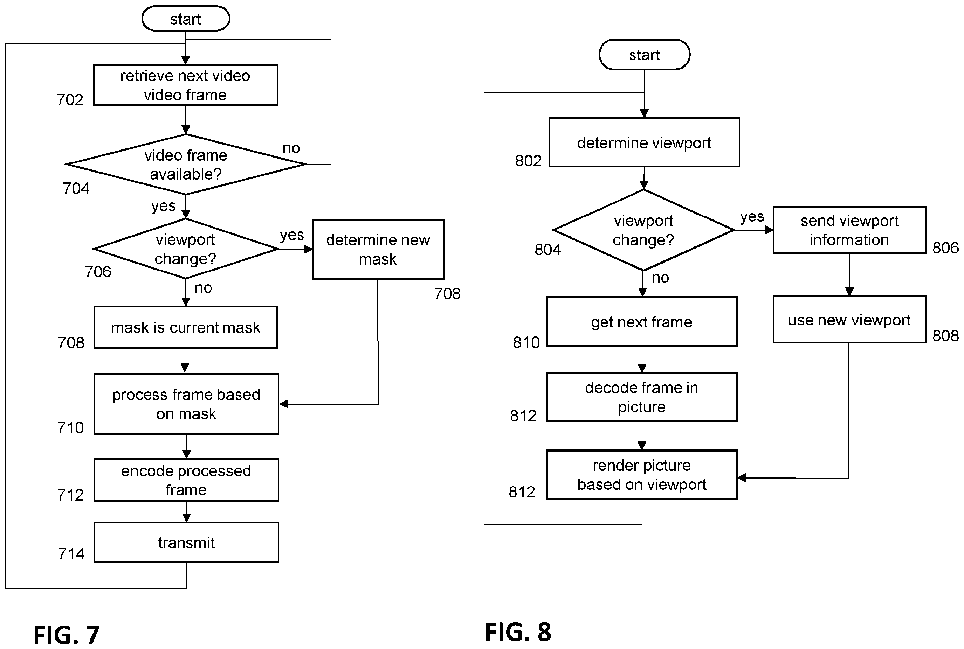

In the above described embodiments of the Projection Normalization Algorithm (PNA) rely on transforming pixels of a projected video frame associated with a certain projection model to pixels on a sphere (i.e. spherical video data) and comprising the positions of the pixels on the sphere with the position of the viewport expressed in spherical coordinates. Such algorithm may be implemented in the masking module of the video processing server as depicted in **Fig. 7.** In another embodiment, the projection model may be used to transform the position of the viewport on the virtual sphere to a projected viewport on the 2D rectangular plane of the projected video frame. Pixels in the 2D rectangular plane may be compared to the coordinates of the projected viewport (the ROI) in order to determine if pixels are positioned outside the ROI (i.e. the viewport). Based on such algorithm the masking module of the server may determine which pixels in a projected video frame needs to be masked.

**Fig. 7** and **8** depict flow diagrams of methods of processing video data according to various embodiment of the invention. In particular, **Fig. 7** depicts a flow diagram of a video data processing scheme that may be executed by a video processing apparatus, e.g. an edge server, as described with reference to **Fig. 7.** The video data processing may include using the viewpoint information to determine whether a pixels is outside the viewport and applying a masking operation to pixels of a first video frame, if the pixels are located outside the viewport.

The process may include a step **702** of the server receiving or retrieving video data, e.g. one or more decoded (raw) video frames from a video source. The video source may be a separate media server. If a video frame is not available, the server may again request a video frame (step **704**). If a new, second video frame is received, the server may use the viewpoint information received from the client device to determine if the position of the viewport has changed (step **706**). In an embodiment, viewpoint information may be transmitted continuously or regularly by the client device to server. In that case, the server may determine whether the position change of the viewport is larger than a certain threshold value. When this condition is met, the server may determine that a viewport change has occurred that requires the generation of a new mask. Alternatively, the client device may only transmit viewpoint information to the server if the viewing direction of the user is larger than a certain threshold value. In that case, the server may assume that a generation of a new mask is required as soon as viewpoint information is received by the server.

Thus, the new position of the viewport (as determined on the basis of the viewpoint information) may be used to generate a new mask (step **708**) by using the new viewport position to determine which pixels are located outside the viewport and applying a masking operation to pixels located outside the viewport based on the new mask (step **710).** If the position of the viewport has not changed or the change of the position is less than a certain threshold value, the server does not need to update the mask and may use the current mask for a masking operation on the second video frame.

The masking operation may result in a processed (masked) video frame **710** including a ROI, i.e. a bounded area of pixels in the video frame, comprising pixels to be rendered by a video processing device. The processed video frame may be encoded by a video encoder (step **712**) and sent to the client device (step **714**) that requested the video data. The time between reception of the viewport and the transmission of a processed video frame should be a short as possible so that the client device may receive and process (decode) the processed video frame as fast as possible.

**Fig. 8** depicts a flow diagram of a video data processing scheme according to an embodiment of the invention. The process may be executed by a client device as described with reference to **Fig. 6.** The process may include the client device determining the position of its current viewport, based on the viewing direction (step **802**). In an embodiment, if the client device determines that the position of the viewport has changed **806,** the client device may send viewpoint information to the client device (step **806**) and sets the position of the current viewport to the new position (step **808**). In other embodiments, the client device may send viewpoint information at certain (regular or periodic) time intervals to the client device, regardless of whether the position of the viewport has changed or not. The client device may receive the next encoded masked video frame from the server (step **810**) and decode the masked video frame (step **812**) into a decoded masked video picture which may be used by a rendering engine of the video processing device to render pixels in the ROI on the basis of the current position of the viewport in spherical coordinates (i.e. the current position of the viewport on a virtual sphere). In general, the viewpoint information may comprise information about the viewing direction of the user (e.g. a viewpoint, the centre the viewport or a corner of the viewport) and, optionally, information about the size of the viewport.

The above-described video data processing schemes are not only suitable for processing spherical video data but may also be applied to 2D video data. For example, a pixel masking operation may be applied to pixels outside a ROI in a 2D video frame, representing a bounded area of pixels for a zooming operation.

The viewpoint information may be transported over a low-delay communication channel which is set up between the client and the video processing apparatus. In an embodiment, an IETF RFC 6455 WebSocket bidirectional communication channel between the client device and the video processing apparatus may be used to transmit processed (masked) video frames to the client device and to transmit viewpoint information to the video processing device. In an embodiment, client device may communicate with the video processing apparatus based on JavaScript Object Notation (JSON) messages encoded using UTF-8.

When using spherical video data, angular coordinates may be used to indicate a viewing direction as a viewpoint on spherical surface, e.g. a virtual sphere or a virtual cylinder. The viewpoint may also define the position of the viewport. 3D coordinates, e.g. Cartesian coordinates or spherical coordinates, may be used to indicate a location on the spherical surface. For regular 2D video, 2D Cartesian coordinates may be used. In some embodiments, another coordinate system may be required.

As most screens have a substantially rectangular shape, information about the width and the height of the FOV of the video player apparatus may allow the video processing device to limit the viewport based on the size of the FOV. For spherical video data, the video processing apparatus may determine or receive information associated with the viewing frustum of the video player apparatus. In that case, the (angular) limits to the horizontal and vertical FOV may be sent by the client device to the video processing apparatus. Non-rectangular viewports may require additional or different parameters defining the viewport.

In addition to parameters related to the position and size of the viewport, the viewpoint information may also include information about a translational and/or rotational velocity and/or acceleration associated with changes in position of a viewport due to a user changing its viewing direction. Such information may be used by the video processing apparatus to predict future positions of the viewport.

In certain cases, some parameters do not need to be signalled by the client device to the video processing apparatus. For instance, when the video processing apparatus is aware of the model of video player apparatus, e.g. a head mounted display (HMD), the field of view bounds and/or the screen size may be preconfigured in the video processing apparatus so that transmission of such information is not needed. If the user is not allowed to adapt the size of the viewport, this size may need to be indicated only once. Further, for certain screen sizes of the video processing device, the 'roll' rotation of the video player apparatus may be ignored by assuming a worst-case scenario during rendering. This requires rendering an area constrained by the diagonal of the field of view, and simplifies the determination of the masking area as elimination of the roll rotation angle greatly simplifies the PNA algorithm.

In an embodiment, the viewpoint information sent to the video processing apparatus may include one or more parameters having a data format as defined in **Fout! Verwijzingsbron niet gevonden..** The type and format of parameters that are sent in the viewpoint information to the server may depend on the specific implementation.

Table 1. viewport parameters

| Parameter | Type | Description |
|---|---|---|
| pitch | float value | angle in radians |
| yaw | float value | angle in radians |
| roll | float value | angle in radians |
| horizontal_fov_constraint | float value | angle in radians |
| vertical_fov_constraint | float value | angle in radians |

In case of very fast and/or large changes in the position of the viewport on the virtual sphere, the position of the current viewport (on the virtual sphere) may not coincide with the position of the viewport (on the virtual sphere) that was used by the video processing apparatus to mask the video frame which the client device currently is going to render. Hence, in that case, the position of the current viewport of the video player device may move outside the area of non-masked pixels of a masked video frame. This way, the video player apparatus may render pixels that include masked pixels thereby degrading the user experience. In order to mitigate such effects, several measures may be taken.

In an embodiment, if the client device determines or predicts that a change in the position of the viewport may cause the current viewport to move outside the area of non-masked pixels of a masked video picture, the client device may send a message to the video processing apparatus, wherein the message may signal the video processing apparatus that the position of the current viewport is going to move outside the non-masked area of a masked video frame. The message may include viewpoint information associated with the position of the current viewport or FOV of the video player apparatus. In response, the video processing apparatus may perform a masking operation to a video frame on the basis of the current position of the viewport. Preferably, when changing to a new viewport potion first a masked I-frame may be sent the client device. This way, artefacts and/or the display of masked pixels may be prevented, and/or the coding efficiency of subsequent B-frames may be improved. Thus, the interval at which I-frames and associated P-, and B-frames are sent to the client device may depend on the movment of the viewpoint. The process may comprise the following steps:

- retrieve raw video data of video frames associated with specific presentation time stamps (PTS) from the buffer;
- apply a masking operation to the video frames based on the current viewpoint information;
- encode the video frames (always begins with I-frame) using an I-frame interval that is determined based on pervious movements of the viewport; and
- generate a bitstream comprising the encoded video frames to a first-in-first-out FIFO buffer which directly streams the bitstreams to the client device (as detailed below) until a new viewport is indicated.

Pseudo code of the process of creating a new mask is described in table 2 hereunder.

Table 2 video encoding process based on previous movements of the viewport

```
//thread 0: Main thread
maskThread = null
outputVideo = null
rawVideo = null
previousFoV = []
onFoVChange(FoV) {
 previousFoV.add([timeNow(), FoV])
 shiftltemWhenOverflow(previousFoV)
 if (maskThread != null){
  maskThread.stop()
  maskThread.destroy()
  }
 maskThread = new Thread(createMask(FoV))
}
// thread 1: Decode video
while (running === true) {
 decode(rawVideo)
}
//thread 2: Create mask
function createMask(){
 while(frame = getNextFrame(rawVideo)) {
  mask = createMask(FoV)
  output = addMask(mask, frame)
  outputVideo.add(output)
 }
 }
//thread 3: Encode video
encoder.iframelnterval = calculateAverageFovChangelnterval(previousFoV)
while(frame = getNextFrame(outputVideo)) {
 encoder.ingest(frame)
 }
```

In an embodiment, a client device may be configured to buffer video data as long as the playout rate is lower than the rate of streaming or downloading the video data to the client device. This way, the client device is always ensured of a high-quality image, even after a (rapid) changes in the position of the viewpoint. When masked video frames are buffered by a client device, the client device may drop (flush) the buffer when the current FOV moves (or is going to move) outside the viewport area of the buffered masked video frames. At the same time, the client device may transmit viewpoint information including the current viewpoint to the server. The viewpoint information may be sent in a request message to the video processing apparatus in order to request the video processing apparatus to generate masked video frames based on the current viewpoint position and to transmit the masked video frames to the client device. In an embodiment, reference information, e.g. a frame number associated with the current video frame that is processed by the client device and/or the video player apparatus or a time stamp, may be may be sent in the request message to the video processing apparatus. This way, the video processing apparatus can determine from which video frame in the sequence of video frames it should start the masking process based on the new viewpoint.

The video processing apparatus may control the masking of the video frames by the video processing apparatus based on the available bandwidth. For example, the video processing device may transmit: a non-masked video frame in the highest quality when bandwidth allows (which do not need any modifications), a masked video frame comprising an area of non-masked high resolution pixels at intermediate available bandwidth, or a masked video frame comprising an area of non-masked pixels, wherein the area of non-masked pixels includes an areas of high-resolution pixels and an area of low-resolution pixels using the least amount of bandwidth. Alternatively, based on the available bandwidth the client device may request either a masked video frame or a non-masked video frame.

In some embodiments, the video processing apparatus may use information obtained from earlier viewpoint information (and possibly viewpoint information from different client devices that stream the same video data) to predict positions of the viewport in the near future, i.e. at time instances following the current time instance. In case of previously rendered video data by the client device or other client devices, the video processing apparatus may determine predictions of viewport positions and viewport changes per frame. This way, a masked video frame may be generated by the server in advance thus resulting in a lower motion-to-high-quality latency.

In an embodiment, metrics, preferably viewport metrics, may be determined by the video processing apparatus by storing previously received viewpoint information from one or more client devices in a database. In another embodiment, metrics may be determined by viewpoint information at specific time instance in for one or more client devices. The former embodiment may save processing power by the video processing apparatus but may cost extra storage space. The latter embodiment may be useful if the viewport changes or viewing behaviour may be grouped or categorized. For example, in the case of a nature documentary, depending on interest, some people may look at the scenery and others at the person in the video that is explaining the scenery.

In an embodiment, in order to process viewpoint information for predicting future viewport positions, the viewpoint information may be associated with a time stamp, e.g. a presentation time stamp (PTS), and stored with timestamp information in a database. An example of a data format is provided in table 3:

Table 3: data format of timestamped viewpoint information

```
{
      "FoV-Requests": [{
                  "pts": 13135135,
                  "yaw": 20,
                  "pitch": 30,
                  "roll": 4
            },
            {
                  "pts": 13195135,
                  "yaw": 21,
                  "pitch": 40,
                  "roll": 4
      }
      ]
}
```

Movement of certain objects in a video may be very predictable, e.g. tracking a soccer ball from one side of the field to the other. The position of such objects in video frames may be determined based on well-known object recognition and object tracking software. The server may monitor the movements of such objects in video frames and use the position and movement of the objects to predict a future position of a viewport. Thus, during video streaming, objects in the video may be recognized and tracked and based on this information the server may make a prediction about (the position of) one or more further (future) viewports. Predicted viewport positions may be used to create one or more masks in advance thereby decreasing the MTHQ latency. In an embodiment, the prediction of a position of a viewport may depend on the speed of the movement of the viewport. The prediction of a viewport location may include analysis of historic viewport data.

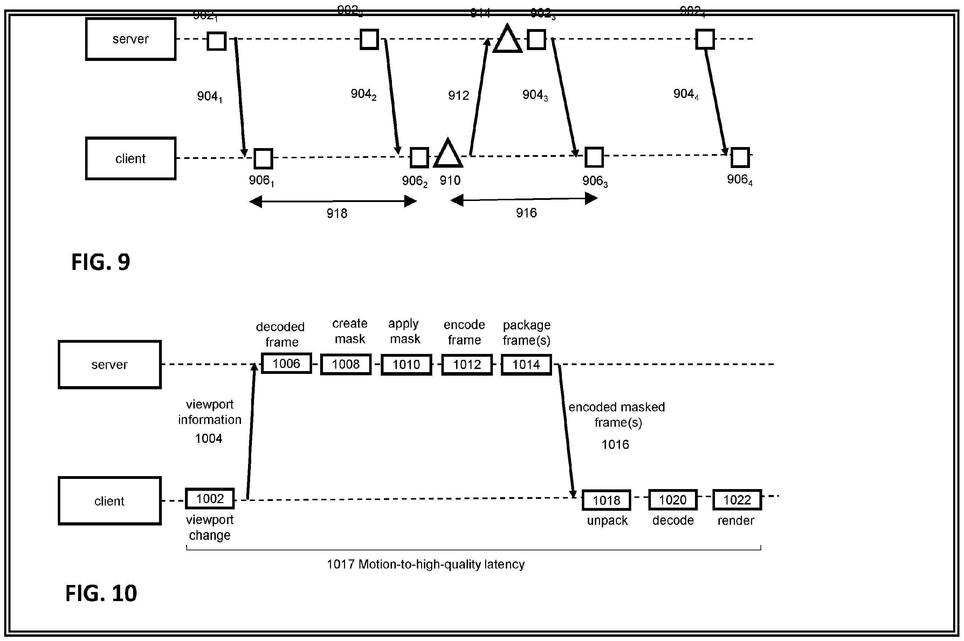

**Fig. 9** and **10** depict flow diagrams of video streaming processes according to various embodiments of the invention. In particular, **Fig. 9** depicts a flow diagram of a viewpoint-based video streaming scheme between a video processing apparatus, e.g. an (edge) server and a client device as described with reference to **Fig. 6.** As shown in the flow diagram, during streaming, at predetermined time instances the server may generate encoded one or more masked video frames based on one or more decoded (raw) video frames and information of a first position of the viewport (on the virtual sphere) (step $902_{1,2}$) and transmit the one or more encoded masked video frames via communication channel, preferably a low-delay communication channel, to the client device (step $904_{1,2}$). The client device may decode the encoded masked video frame into a masked video picture (step $906_{1,2}$) which can be rendered by a rendering engine of the video player apparatus in which the client device is executed. When the client device detects a (sufficiently large) change in the position of the viewpoint (step **910),** the client device may transmit viewpoint information to the server (step **912**). When the server receives the viewpoint information (step **914**) it may apply a mask operation to a video frame based on a viewport associated with the new viewpoint to one or more video frames (step $902_{3,4}$) and transmit the one or more encoded masked video frames to the client device (step $904_{3,4}$), which decodes the encoded masked video frames into masked video pictures (step $906_{3,4}$) which are rendered by the video player apparatus to the user. During the process, the client may determine the time between the detection of the change in the viewport (step **910**) and the rendering of a masked picture that was generated based on the updated field of view (step $908_3$) (step **916**). This time may be referred to as the so-called motion-to-high-quality (MTHQ) latency.

It is one of the aims of the embodiments in this disclosure to save bandwidth when transmitting video data from server to client and to reduce the MTHQ latency as low as possible in order to avoid artefacts in the rendering. Preferably, the motion-to-high-quality latency is less than a time interval measured by the client device which defines the time between the rendering of two subsequent masked video pictures (step **918**).

Possible implementations for transmitting the viewport from server to client are described below. It is advantageous that the sum of the time to create an encoded masked video frame and the time to transmit the encoded masked video frame is smaller than the time between frames at playout.

**Fig. 10** describes the process from viewport change to rendering in more detail. These process steps may define the so-called motion-to-high-quality (MTHQ) latency **1017.** As shown in this figure, the client device may detect or determines a change in the position of the viewport (step **1002**). In response, the client device may send viewpoint information comprising at least the new position of the viewport (e.g. in the form of coordinates of a viewpoint) to the server (step 1004). In an embodiment, the client device may send the viewpoint information prior to or along with each frame request to the server. In another embodiment, the client device may send the viewpoint information at a fixed (periodic) interval to the server. In yet another embodiment, the client device may send the viewpoint information to the server only when the client has detected that the position of the viewport has changed. A threshold may be used in order to send viewpoint information related to a sufficiently large change in the position of the viewport. The server may select a video frame (step **1006**) for transmission to the client device, determine a viewport on the basis of the viewpoint information (step **1008**) and apply a mask operation to a pixels of the video frame that are positioned outside the viewport (step **1010**). The server may then encode the masked video frame (step **1012**) and, optically package (step **1014**) the masked video frame and transmit the encoded masked video frame to the client device (step **1016**). In response to the reception of the encoded masked video frame, the client device may (if applicable) uppack the encoded masked video frame (step **1018**), decodes the encode video frame into a masked video picture (step **1020**) and render the video picture in the viewport of the video processing device (step **1022**).

The MTHQ latency may depend on these process steps. Thus, in order to reduce the MTHQ latency, each individual step should take as little time as possible. Reduction of the latency may be realized by using a low-latency communication channel, e.g. a bidirectional WebSocket communication channel, between the server and the client device. Additionally, further reduction of the latency of the communication channel can be achieved by implementing the server as a network node that is physically close to the client device. For example, in an embodiment, the server may be implemented as an edge server, preferably an edge server as defined in the 5G standard. Further reduction of the MTHQ latency may be obtained by using viewport (or viewpoint) metrics for enabling the server to predict viewpoint positions at time instances following the viewpoint position at the current time instance. In an embodiment, the client device may be configured to determine the MTHQ-latency and to transmit the measured latency to the server.

In an embodiment, the client device may be configured to measure or at least predict the MTHQ latency. For example, when transmitting viewpoint information to the server, the viewpoint information may include information that enables a client device to determine the MTHQ latency, in particular the round-trip-time (RTT) between the transmission of the viewpoint information to the server and the reception by the client device of video frames that are masked based on the viewpoint information. The viewpoint information may include reference information identifying one or more video frames which the client device was processing when the viewpoint information was sent to the server and/or a time stamp at which the viewpoint information was sent to the server. In response to the viewpoint information, the server may send masked video frames to the client device and information signalling the client device that the video frames were masked based on the newly received viewpoint information, e.g. the position of the viewpoint, that was used by the server to determine the new viewport for masking video frame, the time stamp and/or reference information that was sent by the client device in the viewpoint information to the server. Te round-trip time and the time needed to render a masked video frame may define the MTHQ-latency which may be sent by the client device in the viewpoint information to the server.

In an embodiment, the latency time, such as the MTHQ latency, may be used by the client device or the server to determine the size of the viewport. For example, in case of relatively large latency times, the client or the server may determine that the viewport needs to be (substantially) larger than the FOV, while at low latency times the client device or the server may determine that the dimensions of the viewport approximately match the dimensions of the FOV of the video playing apparatus.

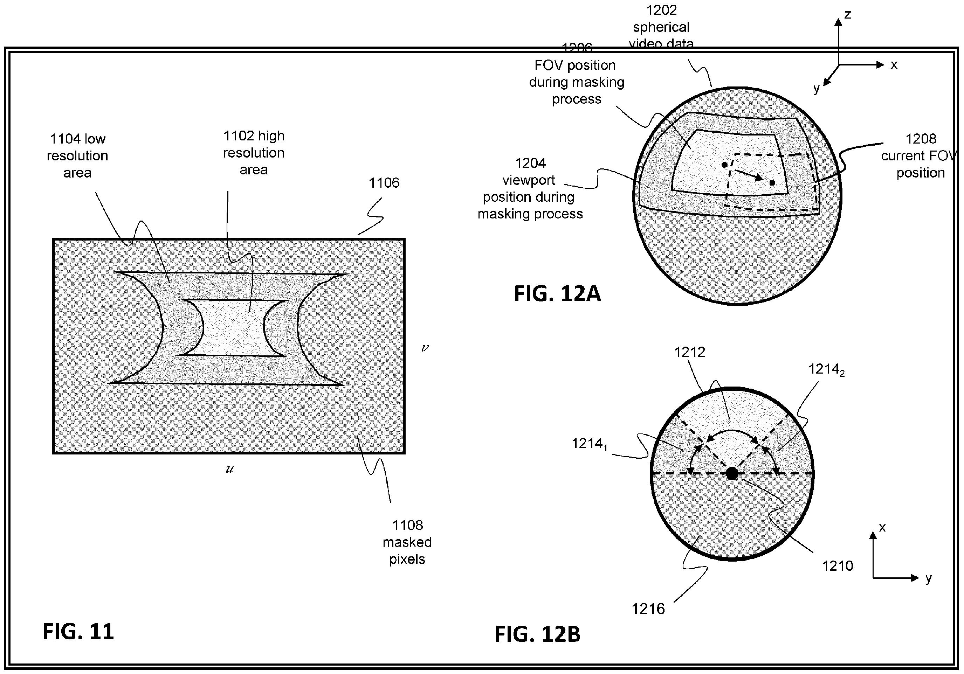

**Fig. 11** illustrates a masked video frame according an embodiment of the invention. In particular, **Fig. 11** illustrates a masked projected video frame comprising an area of non-masked pixels **1102,1104** and an area of masked pixels **1108**. The masked video frame is generated by a video processing apparatus on the basis of a position of a viewpoint as received from a client device requesting video data. In this particular example, the projected video frame includes spherical video data that are projected based on an equirectangular projection model, however other types of projection models may be used as well. In this embodiment, the video processing apparatus may select a view port that is (substantially) larger than the FOV of the video player apparatus.

To ensure that a display apparatus associated with the client device does not render areas of processed pixels **1108** (e.g. masked pixels) during a change in the position of the viewport, the viewport may include at least one area of high-resolution non-masked pixels (e.g. a high-resolution area **1102** that coincides with the FOV of the video player apparatus) and one or more areas **1104** of low-resolution non-masked pixels outside (around) the FOV. The high-resolution non-masked pixels may have the same resolution as the pixels of the original video frame that was masked. The low-resolution pixels outside (around) the FOV may be referred to as a spatial viewport buffer (SVB) or, in short, a spatial buffer. Increasing the SVB may mitigate some of the effects of a long MTHQ latency (which is a combination of the round-trip-time (RTT), the time needed for creating an encoded masked video frame on the server, the time it takes to transmit the encoded masked video frame to the client device, and the time it takes for the client device to decode the encoded masked video frame and render pixels of the decoded masked video frame frame). In some embodiments, the client device may be configured to adjust parameters of the requested viewport to include the SVB. In other embodiments, the client device may be configured to determine viewport parameters and/or SVB parameters. In yet other embodiments, the server may add an SVB to the viewport requested by the client device.

In an embodiment, the SVB **1104** may have static dimensions and/or a static shape. In another embodiment, the dimensions and/or shape of the SVB may vary in time and/or quality depending on the amount of bandwidth available between the server and the client, the MTHQ latency, and/or the frequency and speed of viewport changes. The following paragraphs describe the logic behind the dynamic scalability of the buffer. Sending the viewport may cost a variable amount of bandwidth. Depending on the available bandwidth between a client device and server, the server may determine to increase the size and/or the pixel resolution of the SVB until the extra bandwidth is used. Alternatively, the server may determine, to send the full non-masked video frames of the source video or a low-resolution (e.g. a downsampled version of the non-masked video frames of the source video). In an embodiment, instead of the server, the client may determine to increase the size and/or the pixels resolution of the SVB. The dynamic adjustment of the size and/or pixel resolution of the SVB may be determined on the basis of the available bandwidth. An example of such determination may include the following steps:

Bitrate per pixel for viewport (bpp): current-bitrate / total-pixels-in-viewport SVB increase in pixels: available-bandwidth / bpp

To save bandwidth and simultaneously keep some of the advantages of a sufficiently large SVB (such as the advantages of a low motion-to-photon latency), the pixels in the SVB may be downgraded in quality. In one embodiment, this may be done by executing the following steps:

- create a first projected video frame, representing a low-quality representation of an original projected video frame based on temporal, spatial, and/or lossy compression (depending on the use case);

- optionally, scale up the first projected video frame to the size of the original projected vide frame, determine an area representing a field of view (FOV) in the first projected video frame and the field of view (FOV) the original projected video frame and replace pixels in the field of view of the first (low-resolution) projected video frame by corresponding pixels in the field of view of the original (high-resolution) projected video frame thus forming a dual-resolution video frame including a low-resolution (downsampled) projected video frame comprising a high-resolution field of view;

- determine a processed (masked) video frame by applying a masking operation to the first projected video frame, the mask operation masking pixels outside a viewport, the field of view being located within the viewport, the area between the viewport and the field of view defining the spatial viewport buffer (SVB), wherein the pixels of the SVB are low resolution pixels and the pixels of the field of view (FOV) are high resolution pixels.

This process may result in a masked video frame **1106** comprising a viewport including a FOV **1102** comprising pixels of having a resolution of the original video frame (a first resolution) and a spatial viewport buffer area around the viewport (SVB) **1104** comprising pixels of a resolution lower than the pixels in the viewport (a second resolution lower than the first resolution), and comprising a masked region **1108** outside the viewport wherein the pixels are processed based on a masking operation. The use of an SVB comprising pixels of a lower resolution than the resolution of the source video frames may save bandwidth and reduce visible artefacts. Alternatively, the region **1108** outside the SVB may be pixels of a resolution that is substantially lower than the resolution of the pixels in the SVB.

**Fig. 12A** and **12B** illustrates the use of a spatial viewport buffer according to an embodiment of the invention. In particular, these figures illustrate the increase in the range of movement by a spatial viewport buffer (SVB) . **Fig. 12A** illustrates a 3D representation of a virtual sphere and the position of the viewport including a spatial buffer **1204** and a FOV **1206** during the masking process. **Fig. 12B** represents a cross-sectional view of the sphere in the x-y plane, illustrating the viewing angles of a user of a video player apparatus positioned at the centre of the virtual sphere. Here, the viewing angles are related to the spatial buffer **1214$_{1,2}$** and the FOV **1212therein.** During the video streaming process, a user may change its viewing direction wherein the process should take care that during changes of the viewing direction, the current FOV **1208** of the video player apparatus should stay within the viewport associated with the masked video frame the video player apparatus is currently processing (e.g. decoding and rendering) .

Thus, in an embodiment, the client device may determine a first current viewpoint (representing the current FOV position of the video player apparatus) and compare the first viewpoint position with an earlier second viewpoint that was transmitted as part the viewpoint information to the video processing apparatus. If a distance between the first and second viewpoint is larger than a predetermined threshold, then the client device may send a request for masked video frames based on the first current viewpoint. Alternatively, if the edge of the current FOV moves or is going to move outside the area of non-masked pixels of the masked video frame, then the client device may send a request for masked video frames based on the first, current viewpoint. The request may include the position of the current viewpoint, and, optionally video frame reference information, e.g. a frame sequence number or a presentation timestamp PTS, associated with the video frame that was processed by the video player apparatus when the client device transmits the request for masked video frames based on the current viewpoint to the video processing apparatus. The video processing apparatus may use the video frame reference information to select the video frame to which the masking process based on the new viewport position should be applied to. Additionally, in an embodiment, the video processing apparatus may send the masked video frames and (part of) the viewpoint information (i.e. the viewpoint location or the reference information) to the client device so that the client device is aware of the position of the viewpoint that was used by the video processing apparatus for the masked video frames.

The size of the SVB may depend on the motion-to-high-quality (MTHQ) latency and the average velocity of the movements of the viewport (in degrees or radians per second) of viewport change. If the change in the viewport (e.g. due to the user changing its viewing direction) is faster than the time required to:

- request video frames comprising a viewport that coincides with the new viewing direction of the user,
- update the mask based on the new viewing direction, and
- send back the newly generated masked video frame to the client,

the client device may render part of the masked region (e.g. monochromatic (green) pixels). To solve this problem, the average speed of motion may be used to adjust the SVB to a size that is within the range the viewport may change within a given time or within the range the viewport is expected to change within a given time. In some embodiments, this may result in an asymmetric spatial viewport buffer. For example, if the viewer is moving to the right, the SVB on the right side of the viewport may be made larger than the SVB on the left side of the viewport. The speed of motion of the viewport change can be calculated in the following manner wherein the viewport on the sphere is defined in the form of angular coordinates and time is in seconds:

Duration: End-time-movement - Start-time-movement
Degrees-travelled: FoV-end-angle - FoV-start-angle
Motion-speed: Degrees-travelled / Duration

In an embodiment using an asymmetric SVB, the motion-velocity, i.e. the combination of speed and direction, needs to be determined. In this case, the velocity may be decomposed into a horizontal and a vertical component. The SVB may then be increased accordingly in the corresponding directions. The motion-to-high-quality (MTHQ) latency may be determined by the sum of three time intervals:

- a first time interval between the movement from an old first viewport to a new, second viewport, and the transmission of viewpoint information by the client device to a server in the network that is configured to generate masked video frames comprising a ROI based on position information of the new viewport;
- a second time interval between the moment of transmission of the viewpoint information and reception of a response message comprising a masked video frame comprising a ROI; and,
- a third time interval between reception of the response message and rendering of video data of the ROI to the user.

The current invention may be advantageous for efficient transmission of spherical video data to client devices as transmission of a compressed masked video frame will generally take less time than transmission of a compressed non-masked video frame. In an embodiment, the server may include viewpoint information, e.g. information about the position of the viewport in the received masked video frame, in the metadata of each frame. In that case, the client device may use the metadata of the masked video frame to determine whether the received masked video frame corresponds to the requested viewport. Moreover, the client device may use the position of the viewport to determine whether the current FOV is still positioned within the viewport.

In an embodiment, the server may send a confirmation message, including the frame number of the video frame comprising the requested viewport. The second time interval may be determined based on a first time instance at which the request for a new viewport is sent by the client device to the server and a second time instance at which a response message comprising the video frame comprising the new viewport is received by the client device.

In an embodiment, an average velocity of the viewport movements (i.e. the average velocity at which the position of the viewport moves over the virtual sphere) may be determined by the server based on historical data, e.g. position information of viewports from earlier viewpoint information messages. The average velocity of the viewport motion may be used to determine the dimensions (size) of the SVB. In an embodiment, a decision to change the dimensions of the SVB may include checking whether the time for moving the viewport from a first position to a second position is smaller or larger than the motion-to-high-quality latency (wherein the motion-to-high-quality latency may be calculated by the client device). In an embodiment, the client device may determine the size of the SVB based on this information and may, in certain embodiments, sent this information to the server. Alternatively, and/or in addition, the size of the SVB may be increased based on the viewpoint information, e.g. the FOV angles. This is done in the following way:

```
Width-SVB-degrees: (motion-to-photon-time x Motion-speed) x 2
```

In an embodiment, the width of the SVB (in angular coordinates) and the current viewpoint information may be sent by the client device to the server. In another embodiment, the width of the SVB may be determined by the server based on historical motion data of the viewport. In some embodiments, it may be advantageous to update the position of the mask if an edge of the current FOV of the video processing device, is less than a predetermined distance away from the boundary of the SVB. For instance, if the requested viewport moves (oscillates) around a certain direction (e.g. due to noise on the motion sensor signal, or slight head movements of the viewer), the non-masked area may remain stationary, potentially reducing computational overhead on the server and increasing encoding efficiency. In an embodiment, if the position of the field of view remains within the current spatial viewport buffer, the mask may be updated only when an I-frame is scheduled to be sent.

The masking operation can be performed at different stages of the process. For example, a masking operation can be performed e.g. between the stitching operation and the projection, mapping and packing operations. Alternatively, the mapping operation may be performed between the projection, mapping and packing operations and the encoding operation, or at any other suitable point in the process prior to encoding.

The output of the masking function, i.e. masked projected video frames, may be encoded and compressed to save bandwidth for transmission. Any state of the art video codec H.264, H.265, VP8, VP9, AVC1, AVC2, etc. may be used for coding the masked video frames. Alternatively, compression schemes like JPEG or PNG may be used. A compression scheme may be selected based on the transmission method used (e.g. transmission via WebSocket).

In an embodiment, the edge server may receive encoded video, decode the video, apply the mask based on the viewpoint information received from the client device, and then proceed as before with re-encoding and transmission of the masked video frames.

In some embodiments, to further save bandwidth, the viewport or the projected video frame may be compressed using lossy encoding. The selection of this lossy encoding method, and the decision to use lossy encoding, may vary overtime and may depend on the use case. In all cases, the entire viewport area will be sent, but when the available bandwidth between server and client is very low, the quality of the viewport may be downgraded.

The server will firstly try to encode and transmit the viewport area in the highest possible quality while maintaining a bit rate that is as low as possible. This is done by applying heavy lossless encoding which costs a lot of processing power. Only after the limit of the CPU and/or GPU is reached the image quality of viewport area will be decreased by using temporal, spatial, and/or lossy compression instead of using lossless encoding. The quality of the viewport area can be distributed in different ways among the clients. This depends on the use case and is outside the scope of this document.

In an embodiment, packaging of the masked content may be done via ISO/IEC 14496-12, i.e. ISO base media file format (ISO BMFF). Every file (segment) may comprise one or more frames. Every time a new viewport is requested, a new segment is created. The length (in time) of this segment depends on the amount of time a user is requesting a specific viewport. Next to that the length of the segment may also depend on the creation time of the frame, and the time it takes to transmit this frame from server to client. The time between frames depends on the framerate; e.g. at 30fps the time between frames is 0.033 seconds. Within this time one frame may be created and send to the client. If the server is fast enough, more frames may be created within the available amount of time and added to the segment. This way a buffer of frames may be created at the client which may enhance the playout of the video. Further, the buffer may be purged when the viewport is changed.

In another embodiment, packaging of the masked video content may be done using fragmented MP4. Fragmented MP4 is based on Common File Format & media format specification 2.1 (CFF Media Format) and is referencing ISO/IEC 14496-12. Therefore, the same logic applies as described in the previous paragraph, with the added functionality that while each segment is stored in a single fragmented .mp4 file, transmission of (parts of) the file may happen per segment via byte-range requests before the file is finished.

In an embodiment, the communication between the server and the client, and in particular the transmission of the video content, may make use of WebSocket. WebSocket implementations may be particularly advantageous, because they allow bi-directional communication between client and server, opposed to basic HTTP-implementations where communication always takes the form of a request from the client followed by a response from the server. In particular, an advantage of using WebSocket over segmented packaging and transmission techniques, is that frames may be delivered to the client as soon as they are created by means of a server push. In contrast, segmented streaming techniques may introduce a delay between masking and transmission, because such streaming technique need to buffer video frames in order to process images in chunks, to apply compression and/or to create segments. Therefore, transmission via WebSocket may help reduce the motion-to-high-quality latency.

In an embodiment, wherein the video content is virtual reality (VR) content to be displayed in a web browser (WebVR), additional steps may be required, as a standard web browser may not always support transmitting single unpackaged frames (as opposed to multi-frame segments). To work around this problem, the following steps may be taken for each frame:

- the frame containing the viewport is outputted as an image (e.g. JPEG or PNG) by the encoder;
- the image is transferred via a WebSocket to the client;
- the image is rendered on an HTML5 canvas.

For virtual or augmented reality streaming implementations outside a web browser (e.g. displaying on an Oculus) inter-frame compression may be applied by sending the output of the encoder to a FIFO buffer and sequentially sending the buffer content to the client. At client side the content is received, decoded and displayed directly. This may be realized using standard techniques wherein the receiving side of the WebSocket writes the data to a pipe and the decoder reads from this pipe. As the frames are still being sent one by one, and at the display rate, the server may immediately react to a request to change the viewport.

Initialization of video delivery via WebSocket may involve an initialization message comprising e.g. the elements defined in table 4.

Table 4

| Parameter | Type | Mandatory/ Optional | Description |
|---|---|---|---|
| transmission-type | String | Mandatory | e.g. "websocket" |
| preferred-frame-width | Int value | Optional | If the frame width is lower than the source video the server can decide to downgrade the frame to save bytes in transmission. |
| preferred-frame-height | Int value | Optional | If the frame height is lower than the source video the server can decide to downgrade the frame to save bytes in transmission. |

After the client sends the initialization message it may receive a response comprising e.g. the elements defined in Table 5.

Table 5

| Parameter | Type | Mandatory/Optional | Description |
|---|---|---|---|
| response-type | String | Mandatory | "ok" or "error" |
| response-msg | String | Optional | Optional error message. |
| framerate | Int value | Optional | Is mandatory when the response-type is "ok" |
| frame-width | Int value | Optional | Is mandatory when the response-type is "ok" |
| frame-height | Int value | Optional | Is mandatory when the response-type is "ok" |

After completion of the initialization, the start of the transmission may be indicated by a message from the client to the server, comprising e.g. an element as defined in Table 6:

Table 6

| Parameter | Type | Mandatory/Optional | Description |
|---|---|---|---|
| video-cmd | String | Mandatory | E.g. "play", "pause", or "stop" |

When the play command is sent the transmission of video may start from the current presentation time stamp (PTS), typically 0. Pause may stop the transmission of images, saving the PTS for this session. Stop may stop the transmission of images and additionally (re)set the PTS to 0.

The server message comprising the video frame data may comprise e.g. the elements defined in Table 7:

Table 7

| Parameter | Type | Mandatory/Optional | Description |
|---|---|---|---|
| frame-nr | Int value | Mandatory | |
| frame-data | Blob | Mandatory | Image data |

The transmission of video frames may continue until the client sends a pause or stop command message, until the end of the video content is reached, or until the WebSocket is disconnected. When the video frame data is received at client side the display time at which the received video frame data must be displayed is calculated using the previously communicated framerate and the time of the previously rendered frame. E.g. at a framerate of 30fps, the next frame display time is:

$$\text{Display-Time-Previous-Image-Seconds} + (1/30)$$

When there is no video frame available at that time, the previously rendered image may remain visible until the next image is available. In an embodiment, video data may be transmitted from the server to the client using real-time transport protocol (RTP), as described in RFC3550 'RTP: A Transport Protocol for Real-Time Applications'. The client device may establish a connection via Real-time Transport Control Protocol (RTCP) and transmit viewpoint information via WebSocket to the server. The server may use the viewpoint information to process video frame into masked video frames and send (packaged) video frames to the client device based on the RTP protocol. Such scheme may be implemented according to, but is not limited to, the description in RFC6184 'RTP Payload Format for H.264 Video'. When formatting the encoded video data as network abstraction layer (NAL) units, the NAL units must be sent in decoding order to the client device using non-interleaved mode.

Using the RTP protocol for data streaming from the server to the client device, the buffer of the client device is set to zero. Alternatively, a method may be implemented to purge the buffer when the position of the viewport is moved outside the spatial viewport buffer area of a current masked video frame. In order to minimize the motion-to-high-quality latency, it is desired that video frames are displayed (almost) directly after they are available, taking into account the desired frame rate. When Network Abstraction Layer (NAL) Units are used, it may be indicated that the data are sent in decoding order, using a non-interleaved mode. The data packets may be transmitted over UDP.

In an embodiment, the video content may be virtual reality (VR) content to be displayed in a web browser based on e.g. WebVR. In that case, the transmission of video from server to client may be implemented using Web Real-Time Communication (WebRTC). Video data may be encoded using VP8, VP9, or H.264. When implementing WebRTC, a peer-to-peer connection will be established between the server and the client and the transmission of video may happen via RTP over UDP as described in the previous paragraph. The peer-to-peer connection may also be employed to request a viewport.

In an embodiment, the transmission of video from the server to the client may be carried out using Adobe's Real Time Messaging Protocol (RTMP) as published on December 21, 2012 by H. Parmar, and M. Thornburgh. To do so, both the client device and the server may be configured to use the RTMP protocol for video streaming. When establishing a data connection via a remote procedure call (RPC), a client-side buffer size of 0 must be established, causing the client to receive a stream, or a method must be implemented to purge the client-side buffer when video data corresponding to a new viewport are being sent. The client may use an RPC request to request a new masked video frame that is processed based on the current position of the viewport.

Using MPEG-DASH, the server may offer several versions of a video, differing in bitrate, which are described in a manifest file. The client may switch to a lower or higher bitrate representation of the video depending on the available bandwidth. The SAND protocol, as described in ISO/IEC 23009-5:2017 'Information technology: Dynamic adaptive streaming over HTTP (DASH), part 5: Server and network assisted DASH (SAND)' may be used to enable a client device to choose a representation that is best (or at least suitable) for the available bandwidth faster so that smooth playout of the video is guaranteed. When using conventional DASH, a lower bandwidth will immediately result in a lower quality viewport. Thus, in an embodiment, the bitrate may be increased or decreased by increasing or decreasing the size and/or the quality of the SVB.

In an embodiment, the server does not determine the size of the SVB based on the amount of change in viewport position, but instead, it may determine a number of different video representations with different SVB sizes and qualities. Such video representations may include a video representation of a low bitrate & high MTHQ, a video representation of a low bitrate & low MTHQ, a video representation of a high bitrate & high MTHQ, and a video representation of a high bitrate & low MTHQ. These video representations may be defined in a manifest file, e.g. an MPD. The DASH client may use the MPD to select one of these representations depending on the available bandwidth and will send status- and metrics messages to the Dash Aware Network Element, DANE. The DANE is aware of the viewport associated with the viewpoint of the client device and the DASH content that is streamed to the client device and the DANE may use this information to calculate an optimal bitrate for the client device. The DANE can use the bitrate information to indicate the creation of new viewport representations to the DASH server via a custom Parameters for Enhancing Delivery (PED) message 'CreateRepresentationType' as described in Table 8. As a result, the client device may purge its buffer, to ensure the video data comprising the requested viewport area is rendered to the user.

Table 8

```
<!-- CreateRepresentationType Type -->
<xs: complexType name="CreateRepresentationType">
        <xs: complexContent>
                <xs: extension base="SANDMessageType">
                        <xs: attribute name="width-srb-degrees" type="xs: unsignedlnt"/ >
                        <xs: attribute name="mthq" type="xs: unsignedlnt"/ >
                        <xs: attribute name="bitrate" type="xs: unsignedlnt"/ >
                </xs: extension>
        </xs: complexContent>
</xs: complexType>
```

The decision to create a new representation is based on the difference in bitrate between the current representation and the optimal representation for the client device. The optimal representation may be calculated by using the logic for the SVB as described above and the bandwidth information provided by the DANE. A criterion based on which the decision to change representations is made may depend on the amount of processing power available on the server.

After a new representation has been created, the client device may be signalled to update the Manifest File, e.g. the Media Presentation Description, MPD, by the DANE using an 'MPDValidityEndTime' message containing the time at which the new representation is available.

Using SAND, data packets may be designated as so-called 'privileged packets'. These privileged packets may be used to ensure that packets that need low MTHQ latency (e.g. packets comprising video data representing a newly requested viewport) get priority in the network as described in IEC 23009-5. This way, the client device may create a buffer based on a first viewport but is still able to replace the buffer contents in the shortest possible time.

In an embodiment, the transmission of video from the server to the client device may be implemented using MPEG-DASH with server push, as described in ISO/IEC 23009-6:2017 'Information technology: Dynamic adaptive streaming over HTTP (DASH), part 6: DASH with server push and WebSockets', chapter 7 and chapter 8. The server push option allows the server to push video frames comprising the requested viewport at the required framerate. Video data segments may be made variable in length by e.g. implementing ISO BMFF or fragmented MP4 as discussed above. However, a change in viewport to a viewport comprising pixels not comprised in the current spatial viewport buffer, may require the immediate start of a new segment.

As described with reference to **Fig. 3,** the steps of projecting, mapping and, optionally, packing spherical video data into a projected video frame may result in the formation of artificial region boundaries in a (projected) video frame - which depending on the projection type may include horizontal, vertical, diagonal and/or off-diagonal region boundaries - that are not present in the spherical video data on a pixel sphere. These boundaries are artificial in that they do not represent an actual, physical boundary in the captured scene. When a user of a video processing device changes its viewpoint, the ROI associated with the moved FOV, may comprise various disjoint sub-regions which may affect the pixel masking process.

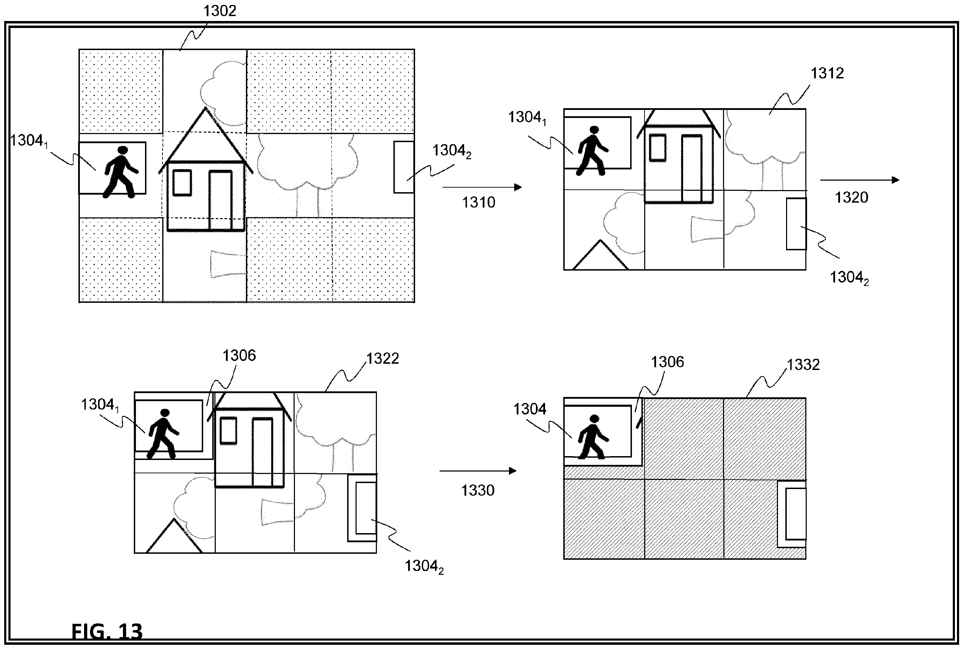

**Fig. 13** illustrates a process of masking a projected video frame according to an embodiment of the invention. In this example, spherical video data are projected onto a 2D rectangular area of a video frame based on a cubic-projection model wherein spherical video data on a sphere are projected to the faces of a cube as e.g. described with reference to **Fig. 3.** A video frame comprising pixels representing a cubic projection **1302** of a spherical video may be subjected to a packing operation **1310** to obtain a packed video frame **1312.** As described previously, a video processing device is only capable of rendering spherical video data that are located in the current viewport on the virtual sphere. The current viewport translates into a ROI **$1304_{1,2}$** in the projected video frame. Due to the particular projection model, the ROI may be divided in a number of ROI regions, e.g. a first ROI region **$1304_1$** and a second ROI region **$1304_2$.** Optionally, an extended boundary **1306** may be determined around the boundary defining the field of view **1304.** The extended boundary defines an area of pixels around the viewport, which may function as a spatial buffer as with reference to **Fig. 11** and **12.** Subsequently, all or at least a substantial part of the pixels outside the ROI are masked **1130,** resulting in a masked video frame, in which the pixels in the ROI (i.e. the pixels in field of view area **1304** and the surrounding guard band **1306**) are unaltered. The masking of the area outside the ROI will have the effect that the entropy of the information associated with the masked pixels is substantially reduced. After compression and/or encoding of the video frame into a bitstream, transmission of such a masked video frame **1332** will require significantly less bits than transmission of the non-masked video frame **1312.**

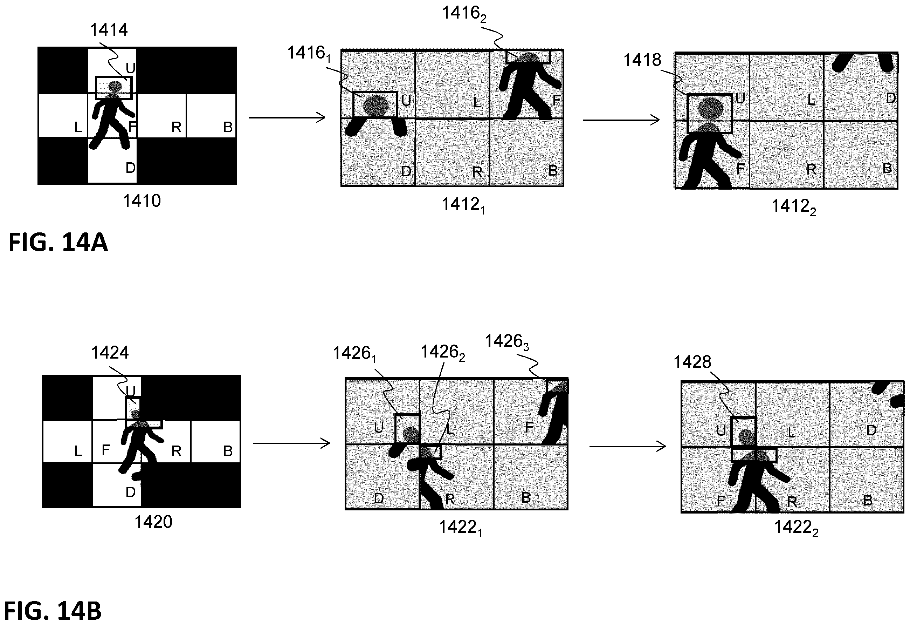

**Fig. 14A** and **14B** illustrate a process of masking a projected video frame according to an embodiment of the invention. In particular, **Fig. 14A** and **14B** depict a cubic-based projected video frame **1410,1420** which may be packed into a projected video frame **$1412_1$, 1422** comprising a ROI comprising two ROI regions **$1416_{1,2}$.** Each of the projected video frames include an arrangement of pixel regions wherein each pixel region represents a face of the cube that is used in the cubic projection (as explained with reference to **Fig. 3** and **4**). As shown in **Fig. 14A** and **14B** the projected video frames **1410, 1420** are associated with a ROI **1414,1424,** which moves along with the head portion of a moving figure in the video frames. A masking operation may be applied to the cubic-type projected video frame resulting in a masked projected video frame including a ROI and masked pixel regions. However, due to a subsequent packing process, the ROI may be split in multiple isolated ROI regions **$1416_{1,2}$** and **$1426_{1-3}$** as depicted by the packed video frames **$1412_1$** and **$1422_1$** respectively.

In some embodiments, the server may rearrange the packing of the pixel regions in order to ensure that ROI covers a contiguous area in the packed video frame. For example, as shown in **Fig. 14A,** ROI regions **$1416_1$** and **$1416_2$** are located in pixel regions U and F respectively. These pixel regions U and F in the first packed video frame **$1412_1$** may be rearranged (remapped) such that the ROI regions form the original ROI, or at least one continuous ROI region. The result of the rearrangement (remapping) is depicted as the second packed video frame **$1412_2$** wherein the rearrangement of the pixel regions results in a packed video frame **$1412_2$** comprising one continuous ROI **1418.** This way, a simpler masking operation can be performed. Similar remapping of pixel regions comprising ROI regions to form the original ROI **1428** or the reduce the number of isolated ROI regions **$1426_{1-3}$** is illustrated for projected video frame **1420** of **Fig. 14B.** The rearrangement of the ROI regions into one ROI may simplify the masking process and/or increase compression and/or encoding efficiency and/or the video quality of the rendered ROI. As shown in the figure, both the location of a pixel region and the orientation of the pixel region may be adjusted. This remapping may be done according to the standard described in ISO/IEC FDIS 23090-2, chapter 5.2.3. A client device may be informed about the remapping of pixel regions. This information may be included in metadata associated with the projected video frames. Alternatively, the server may send this information in a separate message over e.g. a WebSocket to the client device.

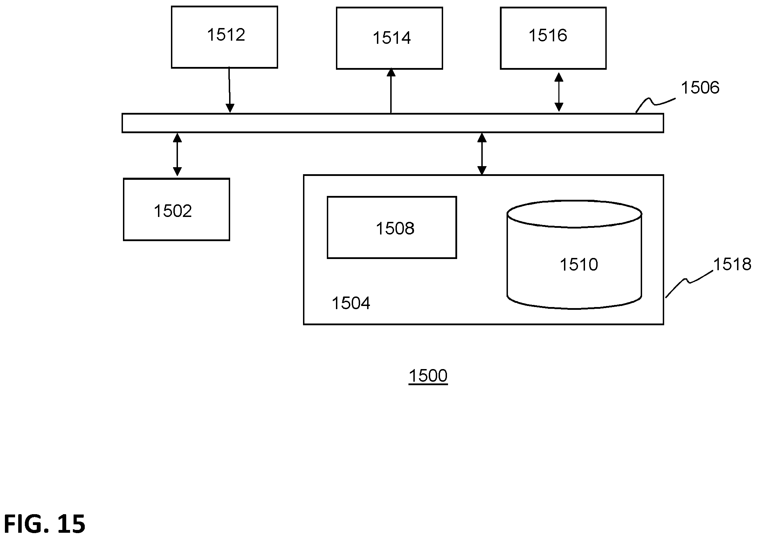

**Fig. 15** is a block diagram illustrating an exemplary data processing apparatus, such as the video processing apparatus and the video player apparatus as described in this disclosure. Data processing apparatus **1500** may include at least one processor **1502** coupled to memory elements **1504** through a system bus **1506.** As such, the data processing apparatus may store program code within memory elements **1504.** Further, processor **1502** may execute the program code accessed from memory elements **1504** via system bus **1506.** In one aspect, data processing apparatus may be implemented as a computer that is suitable for storing and/or executing program code. It should be appreciated, however, that data processing apparatus **1500** may be implemented in the form of any system including a processor and memory that is capable of performing the functions described within this specification.

Memory elements **1504** may include one or more physical memory devices such as, for example, local memory **1508** and one or more bulk storage devices **1510.** Local memory may refer to random access memory or other non-persistent memory device(s) generally used during actual execution of the program code. A bulk storage device may be implemented as a hard drive or other persistent data storage device. The data processing apparatus **1500** may also include one or more cache memories (not shown) that provide temporary storage of at least some program code in order to reduce the number of times program code must be retrieved from bulk storage device **1510** during execution.

Input/output (I/O) devices depicted as input device **1512** and output device **1514** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **1516** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system **1500.**

As pictured in **FIG. 15,** memory elements **1504** may store an application **1518.** It should be appreciated that data processing apparatus **1500** may further execute an operating system (not shown) that can facilitate execution of the application. Application, being implemented in the form of executable program code, can be executed by data processing system **1500,** e.g., by processor **1502.** Responsive to executing application, data processing system may be configured to perform one or more operations to be described herein in further detail.

In one aspect, for example, data processing apparatus **1500** may represent a client data processing apparatus. In that case, application **1518** may represent a client application that, when executed, configures data processing system **1500** to perform the various functions described herein with reference to a "client device".

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. A method of processing video data comprising:

   a processor of a video processing apparatus receiving a decoded video frame, the video frame comprising video data representing a video image, the video data including pixels, wherein each pixel is associated with one or more pixel values representing a brightness and/or colour value;
   the processor receiving viewpoint information from a client apparatus associated with a display, the viewpoint information including viewing direction information defining a viewing direction of a user of the display;
   the viewing direction information being associated with a field of view, FOV, region and a viewport region in the video image, the FOV region defining a region which can be rendered on the display and the viewport region defining a region in the video image that includes the FOV region;
   the processor determining mask information based on the viewing direction information and the decoded video frame, the mask information indicating for each pixel of the decoded video frame if a pixel is located outside the viewport region;

the processor using the mask information to transform the decoded video frame into a decoded masked video frame by applying a masking operation to pixels outside the viewport region, the masking operation reducing the entropy of pixel values of at least part of the pixels outside the viewport region; and,

the processor providing the decoded masked video frame to the input of an encoder apparatus and, the encoder apparatus encoding the decoded masked video frame into an encoded masked video frame.

2. A method according to claim 1 further comprising:

a transmitter apparatus transmitting the encoded masked video frame to a decoding apparatus associated with the client apparatus, preferably transmitting at least part of the encoded masked video frame over a wireless transmission medium, wherein the transmission is based on at least one of: 3G, 4G, 5G, Wi-Fi or Bluetooth; and/or, transmitting metadata associated with the encoded masked video frame to a decoding apparatus associated with the client apparatus, the metadata including at least part of the viewpoint information, more preferably the position of the viewpoint, that was used by the video processing apparatus to generate the encoded masked video frame.

3. Method according to claims 1 or 2 wherein the masking operation includes:

modifying at least part of the pixel values of pixels outside the viewport region into modified pixel values, the modified pixel values being a single predetermined value or the modified pixel values forming a regular pattern and/or periodical pattern; and/or,

modifying at least part of the pixel values of pixels outside the viewport into modified pixel values representing a low-resolution version of the pixel values.

4. Method according to any of claims 1-3 wherein the video frame is a projected video frame, the projected video frame comprising spherical video data representing pixels associated with a spherical video image projected onto a 2D rectangular area of a video frame using a projection model; and/or, wherein the viewing direction information includes a viewpoint, the viewpoint defining the position of the FOV region and the viewport region in the spherical video image, preferably the projection model being based on an equirectangular projection, a cylindrical projection, a cubic projection, a fisheye projection or a pyramidal projection.

5. Method according to claim 4 wherein determining mask information includes:

using the projection model to determine a pixel mapping between a position of a pixel of the projected video frame and a position in the spherical video image; and,

using the position of the viewport in the spherical video image and the pixel mapping to determine pixels of the projected video frame that are located outside the viewport region.

6. Method according to claim 4 or 5 wherein determining masking information further includes:

using the projection model to project the viewport region onto the 2D rectangular area of the projected video frame;

using the projected viewport and pixels of the projected video frame to determine pixels of the projected video frame that are located outside the viewport region.

7. Method according to any of claims 4-6 wherein the position of the viewpoint region is based on angular coordinate system, preferably a spherical coordinate system.

8. Method according to any of claims 1-7 wherein the viewport region is larger than the FOV region, the region inside the viewport region and outside the FOV region defining a spatial viewport buffer, SVB, preferably the dimensions of the viewport region being selected based on the bandwidth available for transmitting the encoded masked video frame to the video player apparatus and/or based on a latency time associated with the transmission of the encoded masked video frame to a decoding apparatus associated with the client apparatus and the reception of the encoded masked video frame by the client apparatus.

9. Method according to claim 8 wherein the FOV region comprises pixels of a first resolution and the SVB comprises pixels of a second resolution, the first resolution being higher than the second resolution.

10. Method according to any of claims 1-9 wherein the viewpoint information and/or the encoded masked video frame are transmitted over a low-latency communication channel between the video processing apparatus and the client apparatus, preferably the low-latency communication channel being a bidirectional communication channel, more preferably the bidirectional communication channel being based on the WebSocket standard, even more preferably the encoded masked video frame being transmitted as NAL units in decoding order to the client apparatus.

11. Method according to any of claims 1-10 wherein the viewpoint information further includes at least one of: information defining the dimensions and/or shape of the viewport, video frame reference information, preferably a video frame sequence number and/or a presentation time stamp (PTS) associated with a masked video frame, a latency time, preferably a motion-to-high-quality MTHQ latency time; and/or, wherein the encoder apparatus encodes the masked video frame based on a predetermined video coding standard, preferably the video coding standard including one of H.264, H.265, HEVC, VP8, VP9, AVC1, or AVC2; and/or, wherein the encoded video data is stored in a data container, preferably one or more ISOBMFF data containers and/or one or more Fragmented MP4 containers; and/or, wherein the encoded masked video frame is transmitted to the client apparatus based on at least one of the following video streaming protocols: WebRTC, RTP, RTMP, or an adaptive streaming protocol, preferably an HTTP adaptive streaming protocol such as MPEG DASH, HTTP Live Streaming, HTTP Dynamic Streaming or HTTP Smooth Streaming.

12. A video processing apparatus, comprising:
a computer comprising a computer readable storage medium having at least part of a program embodied therewith; and a processor, preferably a microprocessor, coupled to the computer readable storage medium, wherein responsive to executing the computer readable program code, the processor is configured to perform executable operations comprising:

    receiving a decoded video frame, the video frame comprising video data representing a video image, the video data including pixels, wherein each pixel is associated with one or more pixel values representing a brightness and/or colour value;
    receiving viewpoint information from a client apparatus associated with a display, the viewpoint information including viewing direction information defining a viewing direction of a user of the display; the viewing direction information being associated with a field of view, FOV, region and a viewport region in the video image, the FOV region defining a region which can be rendered on the display and the viewport region defining a region in the video image that includes the FOV region;
    determining mask information based on the viewing direction information and the decoded video frame, the mask information indicating for each pixel of the decoded video frame if a pixel is located outside the viewport region;
    using the mask information to transform the decoded video frame into a decoded masked video frame by applying a masking operation to pixels outside the viewport region, the masking operation reducing the entropy of pixel values of at least part of the pixels outside the viewport region; and,
    providing the decoded masked video frame to the input of an encoder apparatus and, the encoder apparatus encoding the decoded masked video frame into an encoded masked video frame.

13. A client apparatus associated with a display comprising:
a computer readable storage medium having computer readable program code embodied therewith, and a processor, preferably a microprocessor, coupled to the computer readable storage medium, wherein responsive to executing the computer readable program code, the processor is configured to perform executable operations comprising:

    determining or receiving at a first time instance first viewing direction information of a first viewing direction of a user of the display, the first viewing direction information being associated with a first field of view, FOV, region and a first viewport region in a video image, the video image being defined by pixels of a video frame, the FOV region defining a region in the video image which can be rendered by the display and the viewport region defining a region in the video image that includes the FOV region;
    the processor receiving viewpoint information from a client apparatus associated with a display, the viewpoint information including viewing direction information defining a viewing direction of a user of the display, the viewing direction information being associated with a FOV region and a viewport region in the video image, the FOV region defining a region which is rendered by the display and the viewport region defining a region in the video image that includes the FOV region;
    transmitting first viewpoint information to a video processing apparatus, the first viewpoint information comprising the first viewing direction information, the first viewpoint information signalling the video processing apparatus to generate one or more masked video frames on the basis of one or more decoded video frames, wherein pixels of a masked video frame which are located outside the first viewport region are masked pixels;

determining or receiving at a second time instance, second viewing direction information defining a second viewing direction of the user, the second time instance being later than the first time instance, the second viewing direction information being associated with a second FOV region and a second viewport region in a video image;

receiving one or more encoded masked video frames and processing the one or more encoded masked video frames, the processing including decoding the one or more encoded video frames into one or more decoded masked video frames and using the second FOV region to select pixels from the one or more decoded masked video frames for display by the display; and,

transmitting second viewport information to the video processing apparatus if a part of the second FOV region is located outside the first viewport region or if the distance between a boundary of the second FOV region and a boundary of the first viewport region is smaller than a predetermined distance.

14. A client apparatus associated with a display comprising:

a computer readable storage medium having computer readable program code embodied therewith, and a processor, preferably a microprocessor, coupled to the computer readable storage medium, wherein responsive to executing the computer readable program code, the processor is configured to perform executable operations comprising:

determining or receiving at a first time instance first viewing direction information of a first viewing direction of a user of the display, the first viewing direction information being associated with a first field of view, FOV, region and a first viewport region in a video image, the video image being defined by pixels of a video frame, the FOV region defining a region in the video image which can be rendered by the display and the viewport region defining a region in the video image that includes the FOV region;

sending first viewpoint information to a video processing apparatus, the first viewpoint information comprising the first viewing direction information, the first viewpoint information signalling the video processing apparatus to generate one or more masked high-resolution video frames on the basis of one or more decoded video frames, the one or more pixels of a masked high-resolution video frame which are located outside the first viewport region being masked pixels; preferably the masked pixels having a single pixel value or having pixel values forming a regular and/or period pattern;

determining or receiving second viewing direction information defining a second viewing direction of the user, the second viewing direction information being associated with a second field of view FOV region and a second viewport region in a video frame;

receiving one or more encoded masked high-resolution video frames and one or more encoded high-resolution video frames, each of the one or more encoded high-resolution video frames being a low-resolution version of the video frames that were used to generate the one or more masked high-resolution video frames; and, processing the one or more encoded masked video frames and the one or more encoded low-resolution video frames for rendering by the display, preferably the processing including:

- decoding the one or more encoded masked video frames into one or more decoded masked video frames and decoding the one or more encoded low-resolution video frames into one or more decoded low-resolution video frames;

- using the second FOV region to select pixels from the one or more decoded masked video frames for rendering by the display; and,

- if a part of the second FOV region is located outside the first viewport region, then using the second FOV region to select pixels from the at least one or more one or more decoded low-resolution video frames for rendering by the display.

15. Computer program product comprising software code portions configured for, when run in the memory of a computer, executing the method steps according to any of claims 1-11.

EP 3 672 251 A1

**FIG. 1**

102 image acquisition → 104 image stitching → 106 projection/mapping → 108 video encoding → 109 trans-mission → 110 video decoding → 112 reverse projection/mapping → 114 rendering

**FIG. 2**

202 spherical video data

$\varphi = -90°,\ldots,90°$

$\theta = 0°,\ldots,360°$

204 projection

206 rectangular video frame

$y = 0,\ldots,y_{res}$
latitude $= -90°,\ldots,90°$

$x = 0,\ldots,x_{res}$
longitude $= -180°,\ldots,180°$

32

FIG. 3

FIG. 4

FIG. 5B

FIG. 5A

520
masked
pixels

514
video frame comprising
projected video data

516
projected
viewport

518
projected
FOV

v

u

FIG. 5D

y

z

x

516
projection

502
spherical
video data

510
FOV

512
viewport

FIG. 5C

FIG. 6

EP 3 672 251 A1

## FIG. 7

start

702 retrieve next video
video frame

704 video frame
available? — no

yes

706 viewport
change? — yes → determine new
mask 708

no

708 mask is current mask

710 process frame based
on mask

712 encode processed
frame

714 transmit

## FIG. 8

start

802 determine viewport

804 viewport
change? — yes → send viewport
information 806

no

810 get next frame

use new viewport 808

812 decode frame in
picture

812 render picture
based on viewport

**FIG. 9**

server

client

902₁  902₂  902₃  902₄

904₁  904₂  904₃  904₄

906₁  906₂  906₃  906₄

908  910  912  916  918

**FIG. 10**

server

client

decoded frame 1006

create mask 1008

apply mask 1010

encode frame 1012

package frame(s) 1014

encoded masked frame(s) 1016

unpack 1018

decode 1020

render 1022

viewport change 1002

viewport information 1004

1017 Motion-to-high-quality latency

**FIG. 11**

1104 low resolution area

1102 high resolution area

1106

1108 masked pixels

*v*

*u*

**FIG. 12A**

1202 spherical video data

1206 FOV position during masking process

1204 viewport position during masking process

1208 current FOV position

z

x

y

**FIG. 12B**

1212

$1214_2$

$1214_1$

1210

1216

x

y

EP 3 672 251 A1

FIG. 13

FIG. 14A

FIG. 14B

**FIG. 15**

Europäisches
Patentamt

European
Patent Office

Office européen
des brevets

# EUROPEAN SEARCH REPORT

Application Number

EP 19 21 6419

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOYCE J ET AL: "Spherical viewport SEI for HEVC and AVC 360 video", 26. JCT-VC MEETING; 12-1-2017 - 20-1-2017; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-Z0034, 5 January 2017 (2017-01-05), XP030118141, | 1,2,4-8, 10-13,15 | INV. H04N19/597 H04N19/17 H04N19/167 H04N19/40 |
| Y | * page 3, paragraph 1.2; figure 2 * | 14 | |
| X | WO 2016/064862 A1 (GOOGLE INC [US]) 28 April 2016 (2016-04-28) * paragraphs [0155] - [0166]; figure 12 * | 1,3,8,9, 12,13,15 | |
| Y | WO 2015/197815 A1 (KONINKL KPN NV [NL]; TNO [NL]) 30 December 2015 (2015-12-30) * page 29, paragraph 14-21 * | 14 | |

TECHNICAL FIELDS
SEARCHED (IPC)

H04N

The present search report has been drawn up for all claims

| Place of search | Date of completion of the search | Examiner |
|---|---|---|
| Munich | 5 February 2020 | Di Cagno, Gianluca |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 19 21 6419

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2020

| Patent document cited in search report | | Publication date | Patent family member(s) | | Publication date |
|---|---|---|---|---|---|
| WO 2016064862 | A1 | 28-04-2016 | CN | 106664403 A | 10-05-2017 |
| | | | DE | 112015004764 T5 | 19-10-2017 |
| | | | EP | 3210379 A1 | 30-08-2017 |
| | | | GB | 2545999 A | 05-07-2017 |
| | | | WO | 2016064862 A1 | 28-04-2016 |
| WO 2015197815 | A1 | 30-12-2015 | CN | 106664443 A | 10-05-2017 |
| | | | EP | 3162074 A1 | 03-05-2017 |
| | | | JP | 6440747 B2 | 19-12-2018 |
| | | | JP | 2017527160 A | 14-09-2017 |
| | | | KR | 20170018352 A | 17-02-2017 |
| | | | US | 2017118540 A1 | 27-04-2017 |
| | | | WO | 2015197815 A1 | 30-12-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018069466 A1

- WO 2018069466 A

### Non-patent literature cited in the description

- POI360: Panoramic mobile video telephony over LTE cellular networks CoNEXT '17. *proceedings of the 13th International Conference on emerging Networking EXperiments and Technologies,* 12 December 2017, 336-349

- **H. PARMAR ; M. THORNBURGH.** *Adobe's Real Time Messaging Protocol (RTMP),* 21 December 2012
- Information technology: Dynamic adaptive streaming over HTTP (DASH), part 6: DASH with server push and WebSockets